# EUROPÄISCHE PATENTSCHRIFT

(11) **EP 3 307 964 B1**
(45) Veröffentlichungstag und Bekanntmachung des Hinweises auf die Patenterteilung: **15.02.2023**
(21) Anmeldenummer: 16731493.9
(22) Anmeldetag: 30.04.2016
(51) Int. Cl.: E04B 1/61, E04F 13/08, E04B 2/74, E04B 1/38, F16B 5/00, E04B 2/72, F16B 5/04, F16B 2/24

(54) **VERBINDUNGSELEMENT FÜR WANDBAUELEMENTE**
CONNECTOR FOR WALL BUILDING ELEMENTS
CONNECTEUR POUR ÉLÉMENTS DE CONSTRUCTION DE MURS

(30) Priorität: 10.06.2015 DE 102015007267
(43) Veröffentlichungstag der Anmeldung: 18.04.2018
(73) Patentinhaber: Gebr. Schmidt GbR, 33335 Gütersloh (DE); Schmidt, Andreas, 33649 Bielefeld (DE); Schmidt, Uwe-Volker, 33649 Bielefeld (DE); Schmidt, Hans-Ulrich, 33803 Steinhagen (DE); Schmidt, Dieter, 33803 Steinhagen (DE)
(72) Erfinder: SCHMIDT, Andreas, 33649 Bielefeld (DE); SCHMIDT, Uwe-Volker, 33649 Bielefeld (DE); SCHMIDT, Hans-Ulrich, 33803 Steinhagen (DE); SCHMIDT, Dieter, 33803 Steinhagen (DE)
(86) Internationale Anmeldenummer: PCT/DE2016/000189
(87) Internationale Veröffentlichungsnummer: WO 2016/198034

(56) Entgegenhaltungen:
- WO-A1-98/04841
- US-A- 2 259 594
- US-A- 5 467 566

## Beschreibung

Die vorliegende Erfindung bezieht sich allgemein auf das Gebiet der allgemeinen Baukonstruktion, die vorwiegend aus tragenden und nicht tragenden tafelähnlichen Elementen gebildet ist. Diese plattenförmigen Bauelemente kommen für den Innenausbau, z.B. für die Verkleidung von Wänden, Decken und/oder zur Erstellung von Leichtbauwänden zur Anwendung. Die plattenförmigen Bauelemente werden, ohne eine Einschränkung vorzunehmen, nachstehend als Wandbauelemente bezeichnet. Zur Verbindung solcher Wandbauelemente werden Verbindungselemente eingesetzt.

Die vorliegende Erfindung betrifft ein solches Verbindungselement zum kraftschlüssigen Verbinden von mindestens zwei Wandbauelementen, wobei das einstückige, aus einem Blechteil geformte Verbindungselement die Form eines Doppel-U aufweist, das aus zwei versetzt und gegenüberliegenden U-Profilen gebildet ist, die einen gemeinsamen Steg aufweisen, wobei ein U-Profil aus jeweils zwei, durch einen Steg beabstandeten, Schenkeln besteht, die sich in senkrechter Richtung und um 180 Grad in voneinander abgewandter Richtung vom Steg erstrecken.

Verbindungselemente zum kraftschlüssigen Verbinden zweier Wandbauelemente sind aus dem Stand der Technik bekannt. Für die Wandbauelemente gilt als häufigster Wandtyp im Innenausbau von Gebäuden die sogenannte Trockenwand. Eine Trockenwand kann, mit Hilfe einer Unterkonstruktion aus Dachlatten oder ähnlichem oder aus Metallprofilen (Metall-Ständerwerk) oder Holzständern (Holz-Ständerwerk), mit verschiedenen Bauplatten errichtet werden. Bauplatten können, aus OSB-Platten (mit u. ohne Dämmstoff), aus Spanplatten, aus MDF-Platten und aus Gips-Bauplatten (GKB nach DIN EN 520) früher als Gipskartonplatten bezeichnet, ohne Nut und Feder, bestehen. Je nach Ausgestaltung kann eine solche Trockenwand den verschiedensten Anforderungen genügen. Beispielsweise werden Gips-Bauplatten, zur Errichtung einer Gips-Bauplattenwand, mit den Schmalseiten aufeinander und/oder nebeneinander gestellt und auf einer der vorgenannten Unterkonstruktionen aus Holz oder verzinkten Stahlprofilen befestigt. Die Befestigung der Wandbauelemente an einer Unterkonstruktion, kann mit verschiedenen Befestigungsmitteln erfolgen, beispielsweise mit Gipskarton-Heftklammern oder mit Gipskartonnägeln, vorteilhafterweise aber durch eine Schraubbefestigung. Eine Schraubbefestigung der Gips-Bauplatten an einer Unterkonstruktion erfolgt mit sogenannten Schnellbauschrauben (z.B. Gipsplattenschrauben mit Trompetenkopf) als selbstschneidende Blechschrauben. Die Fugen der aneinander angelegten Gips-Bauplatten sowie die Schraubenköpfe werden mit einer Spachtelmasse zu einer glatten Oberfläche verspachtelt und anschließend geschliffen. Das Zubehör, welches zur Verbindung solcher Wandbauelemente aus Gipsbauplatten notwendig ist, wie die Schnellbauschrauben, Klammern und Nägel, sind in der DIN 18182 aufgezeigt. Weitere Verbindungselemente sind darin aber nicht enthalten.

Zur Montage der relativ großen Formate der Gips-Bauplatten, deren Regelbreite zwischen 600 mm bis zu 1250 mm, deren Regellänge zwischen 2000 mm bis zu 4000 mm und deren Regeldicke zwischen 9,5 mm und 25 mm beträgt, werden die verschiedenen, zuvor aufgezeigten Verbindungselemente aus dem Stand der Technik, von der Industrie und dem Handwerk benutzt. Bei der Befestigung solcher Wandbauelemente ist handwerkliches Können unerlässlich, weil die Befestigungspunkte, d.h. die Klammern, Nägel und/oder Schnellbauschrauben, nach Fertigstellung einer Wand in den Gipsbauplatten einerseits nicht mehr sichtbar sein sollen, aber andererseits können sich die Schrauben bei dünnen Wandstärken durch eine Gipsbauplatte ziehen. Des Weiteren stellt eine geklammerte, genagelte oder geschraubte Verbindung zwischen einer Gipsbauplatte und der Unterkonstruktion keine kraftschlüssige Verbindung dar, wodurch mehr Befestigungsmittel gesetzt werden müssen. Daher ist die Forderung, die Befestigungsmittel völlig verschwinden zu lassen, einerseits jedoch oft undurchführbar und andererseits mit erheblichen Kosten verbunden. Ist eine Klammer, ein Nagel und/oder eine Schnellbauschraube wiederum zu tief eingedrungen oder sogar fast durch eine Gipsbauplatte an einer Längs-und/oder Querkante durchgedrungen, kann die Kante der Gipsbauplatte leicht brechen, weil die Befestigungsmittel auch unmittelbar an den schmalen Längs- und/oder Querkanten der Gipsbauplatte angeordnet werden müssen. Des Weiteren ist die Verlegung bzw. Montage besonders flächengrößerer Gipsbauplatten beim Aneinanderfügen nicht ohne eine zweite Person möglich. Noch nachteiliger wirkt sich eine Befestigung von Wandbauelementen bei der Montage aus, wenn im Kantenbereich der Wandbauelemente bzw. Wandbauplatten die Anbringung einer Unterkonstruktion, aufgrund baulicher Begebenheit, nicht möglich ist. Aufgrund der, beispielsweise fehlenden Anschraubmöglichkeit, treten Folgefehler auf. Die an den Schmalseiten aufeinander und/oder nebeneinander angelegten Wandbauelemente bilden an den angelegten Stellen Fugen, die nach der Montage mit Spachtelmasse gefüllt werden. Fehlen im Randbereich dieser Fugen, aufgrund der fehlenden Unterkonstruktion, die Befestigungsmittel, so können an diesen Nahtstellen der Fugen Dehnungsrisse entstehen. Des Weiteren sind die Wandbauelemente aufgrund ihrer Größe sehr unhandlich und werden daher nicht alleine verlegt und befestigt bzw. montiert.

Zur weiteren Vereinfachung der Montage von Wandbauelementen offenbart daher die DE 7313323 U eine Klammer zur verdeckten Befestigung von Platten. Zur Montage einer Platte ist es aber notwendig, dass die Klammern vorher an der Unterkonstruktion mittels Schrauben oder Nägel befestigt werden. Erst nach dem Anbringen der Klammern an der Unterkonstruktion kann die Platte zwischen die Schenkel des U-Profils der Klammer geschoben werden. Eine solche Klammer kann auch als langgestrecktes, doppel -T- förmiges Profil ausgebildet sein, dessen T-Schenkel wieder an der Unterkonstruktion zur Aufnahme einer Platte befestigt werden muss. Der Nachteil dieser Ausführungsform von Klammern besteht darin, dass diese nur in Verbindung mit einer Unterkonstruktion verwendet werden können und dass die Anbringung der einzelnen Klammern an der, meist bereits an der Wand befestigten, Tragschiene und vor allem das Anordnen dieser Klammern an einer gewünschten Stelle häufig mühsam und zeitaufwendig ist. Sobald eine Unterkonstruktion an den Verbindungsstellen der Platten aber nicht zur Verfügung steht, sind die Klammern nicht einsetzfähig bzw. verwendbar. Eine kraftschlüssige Verbindung zwischen benachbarten Wandbauelementen besteht nicht, wodurch Dehnungsrissen an den Fugen entstehen können. Ein weiterer Nachteil besteht darin, dass erst nach der Anbringung einer Klammer an der Unterkonstruktion, ein Wandbauelement in die u-förmige Öffnung der Klammer eingefügt werden kann.

Zur Verbesserung der Einsatzfähigkeit schlägt daher die DE 297 03 632 U1 ein Halte- und Ausgleichselement zur Aufnahme von Wandverkleidungsteilen vor, welches auf einfache Art und Weise an der Unterkonstruktion angebracht werden kann. Aber auch diese Ausführungsform von Klammer bzw. Verbindungselement mit einem U-Profil zur Aufnahme eines Wandbauelementes hat den Nachteil, dass es nur in Verbindung mit einer Unterkonstruktion verwendbar ist. Auch hier gilt, fehlt eine Unterkonstruktion im Randbereich der Wandbauelemente, besteht keine kraftschlüssige Verbindung zwischen benachbarten Wandbauelementen, wodurch Dehnungsrissen an den Fugen entstehen können. Ein weiterer Nachteil besteht darin, dass solche Halte- und Ausgleichselemente nicht geeignet sind, beidseitig ein Wandbauelement aufzunehmen. Ein weiterer Nachteil besteht darin, dass erst nach der Anbringung einer Klammer an der Unterkonstruktion, ein Wandbauelement in die u-förmige Öffnung der Klammer eingefügt werden kann.

Aus diesem Grund beschreibt die DE 2004 012 417 U1 u-förmige Verbindungsstücke zum Verbinden zweier Wandbauelemente mit zwei einander gegenüberliegenden plattenförmigen Schenkeln und einem, die beiden Schenkel verbindenden plattenförmigen Steg, wobei der Steg Verbindungsmittel aufweist. Aufgrund der Verbindungsmittel wird es ermöglicht, dass zwei identische, u-förmige Verbindungsstücke zu einem neuen Verbindungsstück, welches dadurch eine H-förmige Form annimmt, zusammengefügt werden. Möchte ein Handwerker beispielsweise zwei, drei oder vier Wandbauelemente miteinander verbinden, so kann er zwei u-förmige Verbindungsstücke zusammensetzen und daraus ein H-förmiges Verbindungsstück bilden, welches zur Aufnahme von zwei Wandbauelementen geeignet ist. Als Nachteil hat sich herausgestellt, dass solche Verbindungsstücke nicht geeignet sind, Gipsbauplatten in den Stärken 9,5 mm bis 25 mm miteinander zu verbinden, weil die Stege aufgrund der angeordneten Laschen und Auswölbungen wesentlich zu breit sind, solche schmalen Bauplatten aufzunehmen. Es ist außerdem von Nachteil, dass, aufgrund der beiden aneinander liegenden Stege und deren Auswölbungen und Laschen, der Abstand zwischen zwei aneinander anliegenden Bauplatten, insbesondere Gipsbauplatten, zu groß wird.

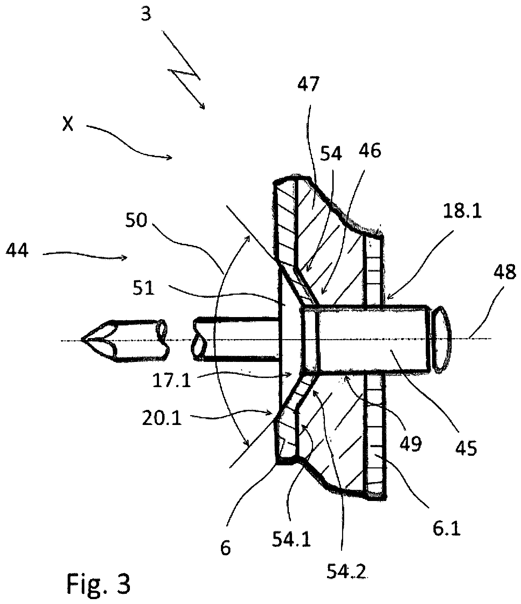

Ein weiteres Beispiel für ein solches Verbindungselement bzw. Verbindungsstück findet sich in der Schrift DE 203 04 627 U1, welche als naheliegenster Stand der Technik betrachtet wird. Bei diesem System, welches auf Befestigungsmittel wie Schrauben und Nägel verzichtet, sind aber für die verschiedenen Anwendungszwecke unterschiedliche Verbindungstücke erforderlich. So werden im Randbereich einer Trockenwand, beispielsweise im Bereich des Bodens und/oder der Decke eines Raumes, üblicherweise U-förmige Verbindungsstücke eingesetzt, wohingegen in anderen Bereichen der Trockenwand H-förmige Verbindungsstücke Verwendung finden. Die DE 203 04 627 U1 offenbart Verbindungsstücke zur Verbindung von Wandbauelementen, die zwei Bauplatten und ein dazwischen angeordnetes Dämmmaterial aufweisen, wobei die Verbindungsstücke U- oder H-förmig ausgebildet sind, d.h., mit zwei einander gegenüber liegenden plattenförmigen Schenkeln und einem, die Schenkel verbindenden, plattenförmigen Steg. Die Verbindungsstücke sind derart ausgebildet, dass die plattenförmigen Schenkel in dem Bereich zwischen Bauplatte und Dämmmaterial eingeführt werden können und auf diese Weise mehrere Wandbauelemente zu einer Trockenwand zusammengefügt werden können. Zu diesem Zweck eignen sich insbesondere Verbindungsstücke mit einer Doppel-U-Form. Aus der Fig. 3 ist ein versetzt doppel-U-förmiges Verbindungsstück ersichtlich, wovon mehrere, gemäß der Fig. 5, in einer Anordnung zur Befestigung zweier Wandbauelemente an der Decke eines Raumes eingesetzt werden. Diese Verbindungsstücke verbinden die Wandbauelemente miteinander. Bei einer solchen Anordnung aus mindestens zwei Wandbauelementen, die über ein oder mehrere Verbindungsstücke miteinander verbunden werden, wobei weder die Bauplatte noch das Material eine Ausnehmung zur Aufnahme von Verbindungsstücken aufweisen, sind die Wandbauelemente aus wenigstens zwei Bauplatten mit einer, zwischen den Bauplatten angeordneten Dämmschicht, versehen. Ein solches Wandbauelement wird als Verbundplatte bezeichnet und weist daher eine bestimmte Dicke auf, die sich aus den zwei Bauplatten und vor allem aus der Dämmplatte ergibt. Das Verbindungsstück ist derart ausgelegt, dass es die Dämmplatte, wie aus der Fig.6 und Fig.7 ersichtlich, umgreifen kann. Der Nachteil dieser Ausführungsform besteht darin, dass das Verbindungsstück nicht geeignet ist, einzelne Wandbauplatten, insbesondere Gipsbauplatten, zur Montage einer Gipsbauplattenwand an den Schmalseiten zusammenzufügen. Diese Verbindungsstücke können nur bei einer doppelten Beplankung und einer dazwischen liegenden Dämmschicht verwendet werden, weil ein Verbindungsstück einerseits das Dämmmaterial am Rand umfasst und andererseits zwischen den beiden Wandbauelementen, insbesondere den Gipsbauplatten, eingeschoben wird. Eine feste Verbindung der Wandbauelemente mit einem Verbindungsstück erfolgt erst durch den Einsatz von Schnellbauschrauben.

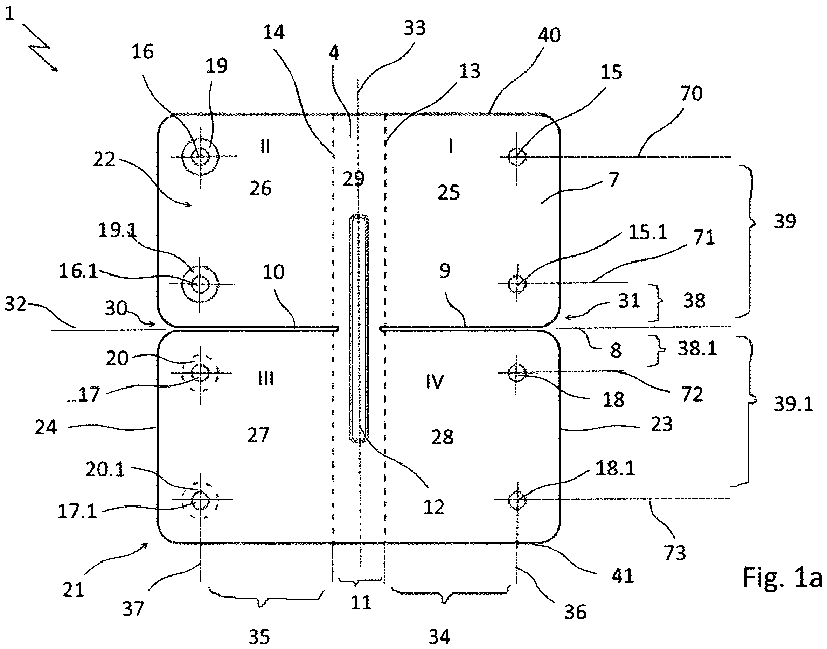

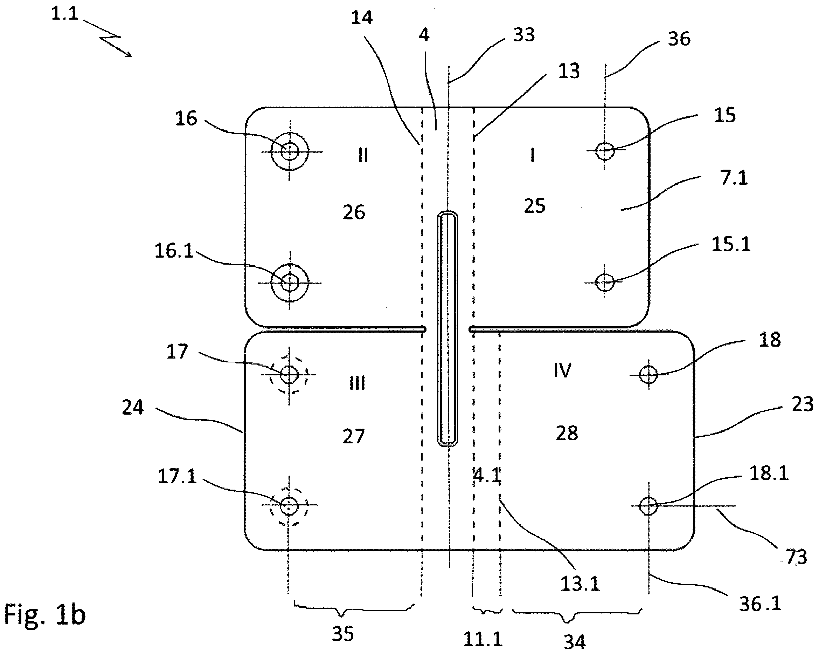

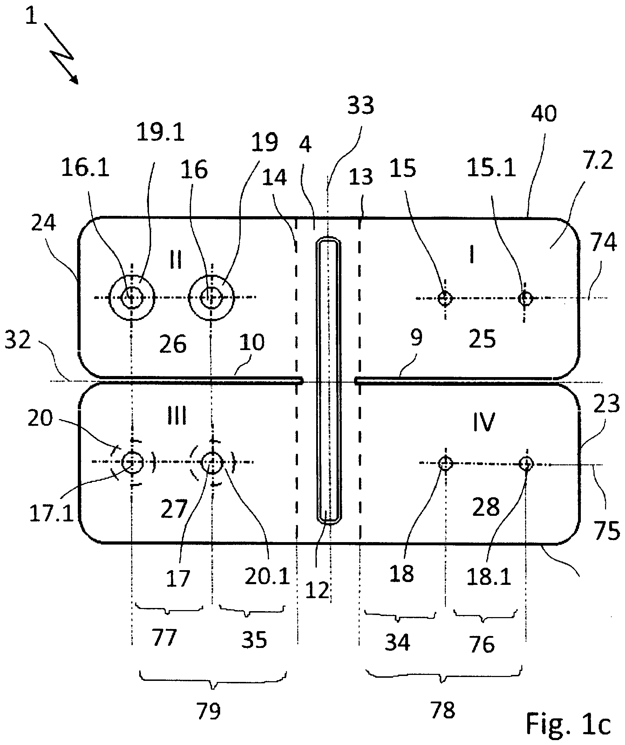

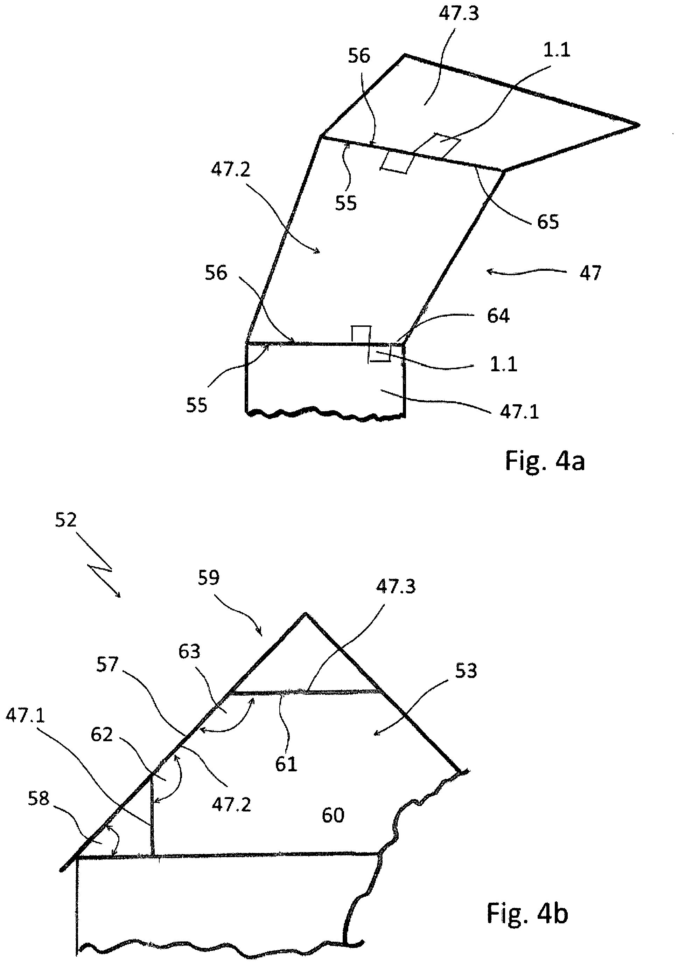

Die WO98/04841 A1 offenbart eine Verbindungsklemme, die zum nächstliegenden Stand der Technik gezählt werden kann. Die Verbindungsklemme wird als Verbinder für plattenförmige Bauelemente u.a. für Gipskartonplatten eingesetzt. Eine solche Verbindungsklemme zum Verbinden von mindestens zwei Wandbauelementen besteht aus einer einstückigen oder mehrteiligen Verbindungsklemme, die aus einem Blechteil gestanzt und geformt wurde. Das geformte Blechteil besteht mindestens aus vier Flächenteilen und einem Basisbereich bzw. Steg, welches die Form eines Doppel-U aufweist. Die Form des Doppel-U wird aus zwei versetzt und gegenüber liegenden U-Profilen gebildet, die bei einer einstückigen Verbindungsklemme einen Basisbereich aufweist, der einen gemeinsamen Steg bildet. Die Verbindungsklemme kann auch aus einer Vielzahl von versetzt gegenüberliegenden U-Profilen bestehen. Ein U-Profil wiederum besteht aus jeweils zwei, durch einen Steg beabstandeten Seitenwänden, die sich in senkrechter Richtung und in, um 180 Grad voneinander abgewandter Richtung vom Steg erstrecken. Der Abstand der Seitenwände zueinander bildet die Breite des Basisbereichs, die der zur Stoßkante hin verjüngenden Stärke einer Gipskartonplatte entspricht, siehe Figur 4. Des Weiteren können die Seitenwände mit Verstärkungselementen, siehe Figur 8a, 8b, ausgebildet sein oder die Seitenwände weisen unterschiedliche Höhen zueinander auf, siehe Figur 7. Die Seitenwände einer Verbindungsklemme können auch mit Einkerbungen versehen sein. Die Einkerbungen bilden Widerhaken, um einen besseren Halt der Verbindungsklemme an einer Gipskartonplatte zu ermöglichen. Die großen Öffnungen bzw. Löcher in den Seitenwänden einer Verbindungsklemme dienen der Aufnahme von Spachtelmasse, damit, nach dem Montieren einer Verbindungsklemme auf einer Gipskartonplatte, zwischen dieser und der, außen auf die Verbindungsklemme aufgebrachten Spachtelmasse, eine Verbindung entsteht, siehe z.B. Figur 6. Weitere Löcher in einer Verbindungsklemme, siehe Figur 1, sind als Nagellöcher vorgesehen, um eine Seitenwand der Verbindungsklemme mit Hilfe von Nägeln mit der Gipskartonplatte zu verbinden. Das Befestigen einer Verbindungsklemme an einer Gipskartonplatte mit Hilfe von Nägeln und Spachtelmasse kann nur von einer Seite aus erfolgen, und somit kann nur eine Seitenwand der Verbindungsklemme an einer Gipskartonplatte befestigt werden. Die hintere Seitenwand der Verbindungsklemme wird zur Befestigung nicht mit herangezogen. Diese einseitige Befestigungsart hat sich als nachteilig erwiesen, weil zwischen der Gipskartonplatte und der Verbindungsklemme keine kraftschlüssige Verbindung entsteht. Die hintere Seitenwand ist bei der kraftschlüssigen Verbindung nicht mit einbezogen, wodurch die Gipskartonplatte nicht zwischen den Seitenwänden der Verbindungsklemme befestigt werden kann. Ein weiterer großer Nachteil dieser Verbindungsklemme besteht darin, dass diese nicht als Befestigungsmittel zwischen einer Gipskartonplatte und einer Dachlatte, einem Balken u.ä. eingesetzt werden kann, sondern nur an den Stoßkanten bzw. Stirnseiten der Gipskartonplatten zwischen zwei Dachlatten oder ähnlichem. Des Weiteren führen Nägel im Material der Gipskartonplatten zu keiner festen Verbindung, sondern können nur zur Fixierung der Verbindungsklemme an einer Gipskartonplatte eingesetzt werden. Ein weiterer Nachteil besteht darin, dass die Nagelköpfe außen auf der Seitenwand einer Verbindungsklemme erhöht hervorstehen. Wenn jetzt noch die Spachtelmasse aufgetragen wird, würde diese Erhöhung als Beule aus der Fläche der Wandbauelemente bzw. Gipskartonplatten hervortreten. Zur Vermeidung dieses Nachteiles werden die Verbindungsklemmen nur bei solchen Gipskartonplatten benutzt, die zu ihrer Außenkante hin verjüngend verlaufen, wie in der Fig.4 aufgezeigt. Eine im verjüngenden Bereich der Außenkante angeordnete Verbindungsklemme, kann mit einer Spachtelmasse aus Richtung auf den verjüngenden Bereich der Gipskartonplatten versehen werden, ohne aus der Fläche der Gipskartonplatten hervorzutreten. D.h., ein weiterer großer Nachteil dieser Verbindungsklemme besteht darin, dass diese nur bei speziellen Ausführungsformen von Gipskartonplatten und nicht bei der Verlegung aller Ausführungsformen von Gipskartonplatten verwendet werden kann. Die Aufgabe der Erfindung besteht also darin, die zuvor aufgezeigten Nachteile zu beseitigen und eine kraftschlüssige Verbindung zwischen einer Verbindungsklemme und mindestens einem Wandbauelement von einer Bedienseite aus, herzustellen.

In der US 5,467,566 wird ein Wand-Befestigungselement als ein nicht tragendes Element einer Baukonstruktion in einem Gebäude offenbart. Zwei Wand-Befestigungselemente können eine Bodenplatte, die auf einem Doppel-T-Träger aufliegt, mit einem Metall-Ständerwerk (Trägergestell) wie eine Klammer verbinden. Ein Wand-Befestigungselement ist oberhalb und eins ist unterhalb der Bodenplatte angeordnet. Das Wand-Befestigungselement besteht aus einer flachen länglichen Platte mit zwei Laschen. Die Laschen sind um 90 Grad von der flachen länglichen Platte entgegengesetzt abgewinkelt. Jede Lasche weist ein Langloch auf, um an einem Trägergestell angeschraubt werden zu können. Zur Befestigung eines Wand-Befestigungselements an einem Trägergestell werden Distanzscheiben und Schrauben verwendet. Der flache längliche Teil des Wand-Befestigungselements weist an der Ober- und Unterseite eine längliche Erhebung in Form einer Prägung auf, auf welcher die Bodenplatte aber nicht zum Anliegen kommt. Die Bodenplatte liegt im Anschluss an die Prägung auf dem flachen Teil des Wand-Befestigungselements auf, wobei die Bodenplatte mit einem abschließenden Winkeleisen versehen sein kann. Die längliche eingeprägte Erhebung oder Vertiefung im flachen Teil des Wand-Befestigungselements soll eine Verstärkung der dünnen Metallplatte des Wand-Befestigungselements erreichen. Ein u-förmiges Umklammern der Stirnseiten von Gipskartonplatten ist mit dieser Ausführungsform von Befestigungselement nicht möglich und somit auch keine kraftschlüssige Verbindung.

Die US 2,259,594 offenbart ebenfalls eine Baukonstruktion für Innenwände und Decken bei welcher Gipskartonplatten verwendet werden. Zum Verbinden der Gipskartonplatten an den Stirnseiten stehen Verbindungselemente in Form von Klammern zur Verfügung. Diese u-förmig ausgebildeten Klammern bestehen aus jeweils zwei, durch einen Steg beabstandete Schenkel. Diese erstrecken sich in senkrechter Richtung und in, um 180 Grad voneinander abgewandter Richtung sich vom Steg erstrecken. Zusätzlich weist diese Klammer einen weiteren länglichen Schenkel auf, der sich von dem Blechstreifen bzw. dem Steg in derselben Ebene in Bezug auf die Wand oder Unterkonstruktion, in diese Richtung erstreckt. Dieser längliche Schenkel ist ebenfalls u-förmig ausgebildet, um die Unterkonstruktion zu erfassen und einen definierten Abstand zur Gipskartonplatte zu erzielen. Der Schenkel, der in der gleichen Ebene wie der Steg liegt, weist eine formgestanzte Rille auf. Die längliche eingeprägte Erhebung oder Vertiefung im flachen Teil des Wand-Befestigungselements soll eine Verstärkung der dünnen Metallplatte des Wand-Befestigungselements in diesem Bereich bewirken. Die, dem länglichen Schenkel gegenüberliegende Seite entspricht dem, in senkrechter Richtung um 90 Grad voneinander abgewandten Seitenwänden der u-förmigen Schenkel der Klammer. Die, der Gipskartonplatte abgewandten Seite der u-förmigen Schenkel, weisen nach außen gerichtete Haken auf. Die nach oben und die nach unten weisende Seitenwand eines U-Profils weist jeweils zwei Haken auf. Diese Haken stehen sich mit ihrer Öffnung beabstandet entgegen. Aufgrund dieser Hakenanordnung kann der Bindedraht jeweils zwei verschiedene Verbindungselemente, die sich an den Stirnseiten der Gipskartonplatten befinden, miteinander verbinden. Dieses in der US 2,259,594 offenbarte Verbindungselement zur Verbindung von Gipskartonplatten untereinander, ist aufgrund seiner Ausführungsform nicht für die erfindungsgemäße Verwendung geeignet und benötigt immer eine entsprechende Unterkonstruktion. Des Weiteren hat sich die Verdrahtung der Klammern mit Bindedraht als einseitige kraftschlüssige Verbindung der Gipskartonplatten untereinander als nachteilig erwiesen.

Eine der Aufgaben der vorliegenden Erfindung besteht darin, die Verbindung von Wandbauelementen mittels Verbindungselementen der eingangs genannten Art weiter zu verbessern, zu vereinfachen und die vorgenannten Nachteile der bekannten Anordnungen aus dem Stand der Technik zu vermeiden und eine technische Lösung anzugeben. Die technische Lösung der Aufgabe besteht darin, eine "Einstückigkeit" des Verbindungselementes sicherzustellen und eine "beidseitige" Aufnahme eines Wandbauelementes, vorzugsweise einer Gipsbauplatte, zu ermöglichen und die "Anbringung der Verbindungselemente an einer Unterkonstruktion zu vermeiden". D.h., das Verbindungselement soll unabhängig von einer Unterkonstruktion verwendet werden und trotzdem Stabilität zwischen aneinander angelegten Wandbauelementen erzielen, um Dehnungsrisse zu vermeiden. Zusammenfassend lässt sich ausführen, dass die meisten aus dem Stand der Technik bekannten Verbindungselemente eine Verbindung zwischen einem Wandbauelement und einer Unterkonstruktion herstellen. Erfindungsgemäß geht es aber um eine Verbindung von Wandbauelementen untereinander, aber nicht zu einer Verbindung zu einer Unterkonstruktion. Mit den neuen Verbindungselementen soll die Stabilität einer Trockenwand bzw. einer Gipsbauplattenwand erhöht und die Montage wesentlich vereinfacht werden.

Weitere Aufgaben der vorliegenden Erfindung bestehen also darin, ein Verbindungselement der eingangs genannten Art dahingehend weiterzubilden, welches einfach und kostengünstig in der Herstellung ist und das mit wenigen und einfachen Handgriffen das Handling von Wandbauelementen, vorzugsweise einer Gipsbauplatte, wesentlich vereinfacht. Eine Befestigung von solchen Verbindungselementen an Wandbauelementen soll in beliebiger Position an den Schmalseiten bzw. Stoßkanten der Längs-und/oder Querrichtung eines Wandbauelementes erfolgen können. Als Wandbauelement bzw. Wandbauplatte kann grundsätzlich jede Art von Bauplatte, die im Trockenbau verwendet wird, eingesetzt werden. Aufgrund der erfinderischen Verbindungselemente kann die Montage von mehreren Wandbauelementen, vorzugsweise von Gipsbauplatten, im Einmannbetrieb erfolgen. Vor allem beim Dachausbau und abgehängten Decken soll die Montage im Einmannbetrieb und somit eine Reduzierung von Personal ermöglicht werden. Auch um Fenster, Türen und andere Öffnungen herum soll der Anschluss von Wandbauelementen erleichter werden. D.h., die erfinderischen Verbindungselemente sollen die Montage von Wandbauelementen wesentlich erleichtern.

Die technische Lösung eines solchen Verbindungselementes zum Verbinden von mindestens zwei Wandbauelementen wird durch die Merkmale des Anspruch 1 beschrieben. Vorteilhafte Ausgestaltungen und Weiterbildungen der Erfindung ergeben sich aus den nachstehenden Unteransprüchen und der Beschreibung unter Bezugnahme auf die beigefügten Zeichnungen.

Erreicht wird die einfache und kostengünstige Herstellung dadurch, dass das Verbindungselement vorteilhafterweise aus einem flachen Stanzteil aus Stahlblech in den Stärken 0,1 mm bis 2 mm, vorzugsweise aus Feinblech in der Stärke von 0,2 mm bis 0,5 mm, gebildet ist. Die Eigenschaften von Feinblech werden durch die Stahlsorte bestimmt, die sich wiederum nach den Einsatzbedingungen des Verbindungselementes richtet, z.B. gute Stanz- und Biegeeigenschaften sowie eine bestimmte Festig- und Steifigkeit. Hier werden die Eigenschaften als Flacherzeugnis zum Stanzen und Kaltumformen bzw. Biegen und Prägen, benötigt. Das Biegen und Prägen von Blechen wird im Prinzip durch das Umklappen eines Flächenteiles gegenüber dem verbleibenden Flächenteil bewirkt, dazu später mehr. Nach dem Stanzen des Feinbleches weist das Verbindungselement vorteilhafterweise eine geometrische Kontur auf, die eine horizontale und eine vertikale Mittellinie enthält, wobei die geometrische Kontur eine fünfeckige, eine viereckige, eine dreieckige oder eine Kreisform aufweisen kann, vorzugsweise eine quadratische oder rechteckige Form. Vorteilhafterweise ist die Form des Stanzteiles symmetrisch ausgebildet, siehe hierzu die Figur 1a. Die senkrechte Mittellinie der Kontur verläuft in der Ebene des Steges und die horizontale Mittellinie verläuft senkrecht zur Ebene des Steges. Der Verlauf der horizontalen Mittellinie ist später vorteilhafterweise identisch mit einer der Kanten an den U-förmigen Profilen, die an einer Stelle mit dem Steg verbunden sind. Des Weiteren weist die Kontur des Stanzteiles, vorteilhafterweise nur zwei Stanzschnitte auf. Die Stanzschnitte verlaufen mittig zur Kontur und von der Außenkante fast bis zur Mitte des Stanzteiles. Die Stanzschnitte verlaufen, auf einer durchgehenden Linie, vorzugsweise der horizontalen Mittellinie.

Mit anderen Worten beschrieben, wird gezeigt, dass eine geometrische Kontur, vorteilhafterweise zwei, auf einer durchgehenden Linie jeweils von einer Außenkante zur Mitte des Stanzteiles verlaufend, voneinander beabstandete Stanzschnitte enthält, die mittig zur Kontur des Verbindungselementes angeordnet sind. Der Abstand der Stanzschnitte zueinander bildet eine Stegbreite, welche der Stärke eines Wandbauelementes entspricht. Die Stärke eines Wandbauelementes, vorzugsweise einer Gipsbauplatte, ist genormt und entspricht beispielsweise der Stärke 9,5 mm, 12,5 mm, 15 mm 18 mm oder 20 mm. D.h., dass für jede Stärke eines Wandbauelementes ein Verbindungselement mit der entsprechenden Breite eines Steges angeboten wird, wobei die Flächengröße der U-förmigen Schenkel gleich bleiben kann. Das gleiche gilt für die Stärke einer Spanplatte usw., so dass eine Vielzahl von Verbindungselementen im Markt angeboten werden können, um den Bedarf bei der Montage von Wandbauelementen zu decken. Die simple Montage eines Verbindungselementes durch einfaches Aufstecken auf eine schmale Längs-und/oder Querkante eines Wandbauelementes und die einfache Befestigung eines Verbindungselementes an einem Wandbauelement durch Verwendung von Nieten, vorzugsweise von Blindnieten mit Senkkopf gemäß DIN 7337, ermöglicht eine einfache und alleinige Verlegung von Wandbauelementen durch einen Handwerker. Des Weiteren wird gleichzeitig vorteilhafterweise die Festigkeit und Stabilität von Wandbauelementen untereinander erhöht, wodurch spätere Dehnungsrisse an den Fugen vermieden werden.

Der Verlauf der Stegbreite in senkrechter Richtung zu den Stanzschnitten bildet den Steg des Verbindungselementes. Da der Steg, aufgrund der geringen Stärke der Wandbauelemente, relativ schmal ausfällt, entsteht auf der Linie, auf der die beiden beabstandeten Stanzschnitte angeordnet sind und einen Abstand zueinander bilden, im Bereich des Abstandes eine geringere Biegefestigkeit. Um die Steifigkeit des Steges und des Verbindungselementes zu erhöhen, wird der Steg mit einer rinnenförmigen Vertiefung längs des Steges, vom Fachmann als Sicke bezeichnet, ausgebildet. Die Sicke ist senkrecht zur gedachten Linie zwischen den beiden Stanzschnitten und symmetrisch im Steg angeordnet. Die Länge der rinnenförmigen Vertiefung (Sicke) im Steg entspricht zwischen 20% bis 80% der Gesamtlänge des Verbindungselementes und verläuft somit im Steg der beiden U-förmigen Profile.

Dadurch, dass das Verbindungselement, gemäß Anspruch 1, ein Blechstanzteil ist, beispielsweise aus verzinktem Stahlblech oder aus nichtrostendem Federstahl oder ähnlichem, ergibt sich eine kostengünstige Herstellungsweise in flächiger Form. Ein solches Stanzteil kann an vorgegebenen Linien geeignet gestanzt, abgekantet und geprägt werden, wodurch sich ein einbaufertiges Verbindungselement ergibt. Zwei Stanzschnitte verlaufen mittig zur Kontur, aber nicht durchgehend. Am Ende der beiden aufeinander zulaufenden Stanzschnitte erstreckt sich jeweils eine Biegelinie. Die beiden Biegelinien verlaufen senkrecht zu Stanzschnitten bis zu den beiden Außenkanten der Kontur, wobei die beiden Biegelinien parallel beabstandet, um eine senkrechte Mittellinie, angeordnet sind. Der Abstand zwischen den Biegelinien bildet die Breite des gemeinsamen Steges der Schenkel, die oberhalb und unterhalb der Stanzschnitte angeordnet sind. Das Biegen von Blechen wird im Prinzip durch das Umklappen eines Flächenteiles gegenüber von dem verbleibenden Flächenteil bewirkt. Das Umklappen von vier Flächenteilen erfolgt an den beiden vorgenannten Biegelinien, wobei das Biegen ein umformendes Fertigungsverfahren ist, welches eine dauerhafte Verformung, hier von zwei U-Profilen, erzeugt. Das verbleibende Flächenteil bildet den gemeinsamen Steg der beiden U-Profile.

Die beiden Biegelinien und die beiden Stanzschnitte bilden vier flächige Quadranten I, II, III, IV, wobei jeder Quadrant I, II, III, IV einem Flächenteil entspricht. Die Flächenteile bilden die umklappbaren Flächen, die nach dem Abkanten jeweils einen Schenkel des U-Profils bilden. Zwischen den beiden parallel beabstandeten Biegelinien entsteht aus dem verbleibenden Flächenteil, dem feststehenden Flächenteil, ein schmaler Steg, der, wie zuvor beschreiben, zur Erhöhung der Festigkeit (Steifigkeit) mit einer Sicke ausgebildet wird.

In jedem Quadranten I - IV eines Flächenteiles ist mindestens ein Stanzloch angeordnet, vorzugsweise zwei Stanzlöcher pro Flächenteil. D.h., das insgesamt acht Stanzlöcher im Stanzteil angeordnet sind. Eine Vielzahl von Stanzlöchern in einem Verbindungselement würden normalerweise keinen Sinn ergeben bzw. keinen zusätzlichen Nutzen bringen, weil eine Befestigung eines Verbindungselementes an einem Wandbauelement durch jeweils zwei Nieten, aufgrund der parallelen Flächenpressung der Schenkel auf das Wandbauelement, völlig ausreichend ist. Ein zusätzlicher Nutzen einer höheren Anzahl von Stanzlöchern, könnte sich aus der Montagesituation eines Verbindungselementes an einem Wandelement ergeben. Eine solche Montagesituation könnte sich beim Anbringen eines Verbindungselementes an einer Ecke eines Wandelementes ergeben. Aufgrund einer Vielzahl von Stanzlöchern im U-Profil eines Verbindungselementes macht es Sinn, zwei Stanzlöcher zur Verbindung mit einem Wandelement auszuwählen, welche am weitesten von einer Außenkante eines Wandelementes entfernt sind.

Jeweils vier, der vorzugsweise acht Stanzlöcher, sind vom Steg und somit von der senkrechten Mittellinie des Stanzteiles parallel beabstandet, wobei jeweils zwei Stanzlöcher sich in einem Quadranten I - IV eines Flächenteiles befinden. Der Abstand der Stanzlöcher zum Steg beträgt mindestens 10 mm und höchstens 35 mm, vorzugsweise ca. 22 mm. Die Stanzlöcher sind annähernd auf den senkrechten Mittellinien der Flächenteile, vorzugsweise näher an den senkrechten Außenkanten, angeordnet. Die Mittellinien der Flächenteile verlaufen parallel beabstandet zum Steg. Hingegen beträgt der Abstand der Stanzlöcher zu den waagerechten Außenkanten der Flächenteile ungefähr zwischen 6 mm und 15 mm, vorzugsweise ca. 10 mm, wodurch der Abstand zweier Stanzlöcher zueinander in einem Flächenteil ca. 30 mm betragen kann. Diese Maßangaben beziehen sich auf ein Flächenteil in der Größe von ca. 40 mm x 50 mm, bei einer Stegbreite für Wandelemente in der Stärke von 9,5 mm bis 18 mm. Sollte ein Flächenteil andere, z.B. größere Maße annehmen, würden sich auch die Abstände der Stanzlöcher zwangsläufig ändern. Die beiden Stanzlöcher in dem Quadranten I sind mit den beiden Stanzlöchern im Quadranten II und die beiden Stanzlöcher im Quadranten III mit den beiden Stanzlöchern im Quadranten IV immer deckungsgleich. D.h., dass diese Stanzlöcher nach dem Biegevorgang bzw. nach dem Umklappen der Flächenteile, die anschließend die Schenkel der U-förmigen Profile bilden, immer senkrecht, nur durch den Steg beabstandet, übereinanderliegen. Die sich im Quadranten I und II sowie III und IV gegenüberliegenden Stanzlöcher bilden jeweils ein Paar von Stanzlöchern, wobei jedes Paar eine gemeinsame Mittellinie aufweist. Pro U-förmigem Profil ergeben sich, aufgrund des vorliegenden Beispiels, somit zwei Paar von sich senkrecht gegenüberliegenden Stanzlöchern. Die Stanzlöcher sind nur durch einen Steg beabstandet und in den parallel zueinander stehenden Schenkeln angeordnet. Des Weiteren sind die Stanzlöcher im Quadranten I und IV auf einer gemeinsamen Mittellinie angeordnet, ebenso die Stanzlöcher im Quadranten II und III. Auf jeder dieser Mittellinien, hierbei handelt es sich um zwei Mittellinien, sind vier Stanzlöcher angeordnet. Diese beiden Mittellinien sind parallel zur senkrechten Mittellinie des Stanzteiles und zu den senkrechten Außenkanten beabstandet. Beidseitig neben der senkrechten Mittellinie ist jeweils eine Biegelinie angeordnet, die parallel zur Mittellinie verlaufen. Zu diesen Biegelinien weisen die Mittellinien der Stanzlöcher einen parallelen Abstand auf. Auch in waagerechter Hinsicht weisen die Stanzlöcher eine Mittellinie auf. Aufgrund der Anzahl der Stanzlöcher ergeben sich vier waagerechte Mittellinien. Auf jeder Mittellinie sind zwei Stanzlöcher angeordnet, wobei jedes dieser zwei Stanzlöcher ein Stanzlochpaar bildet. Diese vier waagerechten Mittellinien sind parallel zur waagerechten Mittellinie des Stanzteiles und symmetrisch zu dieser angeordnet, ebenso zu den Außenkanten des Stanzteiles. Des Weiteren weisen die waagerechten Mittellinien der Stanzlöcher einen bestimmten Abstand zur waagerechten Mittellinie des Stanzteiles auf. Sind eine Vielzahl von Stanzlöchern im Stanzteil enthalten, gibt es natürlich auch eine Vielzahl von senkrechten und waagerechten Mittellinien, auf denen die Stanzlöcher angeordnet, vorteilhafterweise jeweils symmetrisch um die senkrechte und waagerechte Mittelllinie des Stanzteiles.

Um aber eine einfache und kraftschlüssige Verbindung zwischen einem Verbindungselement und einem Wandbauelement zu erhalten, soll das Wandbauelement zwischen den Schenkeln der U-förmigen Profile befestigt werden. Die Befestigung soll erfindungsgemäß mit Nieten, vorzugsweise mit Blindnieten die einen Senkkopf aufweisen, erfolgen. Die Benutzung von Blindnieten mit Senkkopf als kraftschlüssiges Befestigungsmittel hat den Vorteil, dass der Senkkopf nicht aus der Oberfläche der Wandbauelemente hervorsteht. Dazu ist es erfindungsgemäß erforderlich, das jeweils ein Stanzloch von einem Paar von Stanzlöchern eine Senkung erhält. Die Größe der Senkung korrespondiert mit den Abmessungen des Senkkopfes vom Blindniet. D.h., die Größe des Winkels der Senkung am Stanzloch im Flächenteil entspricht dem Winkel des Blindnietkopfes, also ebenfalls 120 Grad. Die Tiefe der Senkung im Stanzteil ist derart ausgebildet ist, das es sichergestellt ist, das der Senkkopf der Blindniete einwandfrei versenkt ist und nicht aus der Oberfläche des Verbindungselementes hervorragt. Des Weiteren wird vorteilhafterweise eine Blindnietgröße vorgeschlagen, mit welcher die unterschiedlichen Stärken der Wandbauelemente in den Verbindungselementen befestigt werden können. Mit einem und dem gleichen Blindniet im Durchmesser von 4,8 mm können Wandstärken von Wandbauelementen im Bereich von 6 mm bis 20 mm befestigt werden. Bei einem Senkkopf Durchmesser von 9 mm und einer Senktiefe von 1,2 mm für 4,8 mm Blindniete, kann sich hinter dem Stanzloch, aufgrund des Prägevorgangs eine Wölbung bilden. Ändert sich die Dicke des Stanzteiles ändert sich auch die Größe der Wölbung. Die Wölbung dient in diesem Fall einer ersten Befestigung des Verbindungselementes an einem Wandelement, weil die Wölbung den Abstand zwischen den beiden U-förmigen Schenkeln partiell verkleinert. Die Wölbungen an Stanzlöchern mit Senkung haben daher die Aufgabe einer Haltefunktion eines Verbindungselementes gegenüber einem Wandelement. Die Haltefunktion besteht darin, das ein, auf eine Außenkante eines Wandelementes aufgestecktes Verbindungselement, nicht herunterfallen kann. Die Senkung eines Stanzloches wird auf der Bedienseite eines Verbindungselementes, auf der Vorderseite eines Schenkels eines Verbindungselementes vorgesehen, um den Senkkopf einer Blindniete aufnehmen zu können, während das andere Stanzloch zur rückseitigen Befestigung durch den Zugdornkopf benötigt wird. Das überstehende Ende der Niethülse wird durch den Zugdornkopf zu einem Schließkopf verformt. Die dazwischen liegenden Materialien, hier die beiden Schenkel eines U-förmigen Profils eines Verbindungselementes mit dem dazwischen liegenden Wandbauelement, werden zusammengepresst, wodurch eine kraftschlüssige Verbindung entsteht.

Zu diesem Zweck ist es erforderlich, dass einige, der in den Flächenteilen der Quadranten befindlichen Stanzlöcher, mit einer Senkung versehen werden, erfindungsgemäss in den Quadranten II und III. Zu beachten gilt aber, dass ein Verbindungselement eine Vorder- und eine Rückseite aufweist. Die Vorderseite eines Verbindungselementes ist bei der Montage mit der Vorderseite eines Wandbauelementes in Einklang zu bringen. Die Senkungen der Stanzlöcher sind daher an der Vorderseite eines Verbindungselementes vorzusehen. Um dieses zu ermöglichen, ist das paarweise Umklappen der Flächenteile an den Biegelinien zu beachten. Die einzelnen Flächenteile der Quadranten I und II weisen nach dem Biegen um ca. 90 Grad, als Schenkelpaar eines U-förmigen Profils, in eine Richtung. Die Flächenteile der Quadranten III und IV weisen jedoch nach dem Biegen um ebenfalls 90 Grad, als ein Schenkelpaar eines U-förmigen Profils, in die andere, entgegengesetzte Richtung.

Daher ist es notwendig, die mit einer Senkung zu versehenden Stanzlöcher, in einer ersten Anordnung, einmal auf der Vorderseite, im Flächenteil des Quadranten II, und einmal auf der Rückseite, im Flächenteil des Quadranten III, eines Stanzteiles anzuordnen. Diese beiden Flächenteile stehen senkrecht übereinander. Die korrespondierenden Stanzlöcher in den Flächenteilen der Quadranten I und IV weisen keine Senkung auf, auch diese beiden Flächenteile stehen senkrecht übereinander. Natürlich kann, aufgrund der symmetrischen Eigenschaften des Verbindungselementes, die Senkung der Stanzlöcher auch umgekehrt erfolgen. Mit umkehrt wird verstanden, dass auch eine andere Anordnung der Senkung an den Stanzlöchern erfolgen kann. Die Senkung der Stanzlöcher kann, in einer zweiten nicht beanspruchten Anordnung, auch auf der Vorderseite im Flächenteil des Quadranten I und auf der Rückseite des Flächenteils IV erfolgen. Die korrespondierenden Stanzlöcher in den Flächenteilen der Quadranten II und III weisen dann keine Senkung auf. Die Senkungen an den Stanzlöchern würden dann in den Flächenteilen der Quadranten I und IV, unter Berücksichtigung von Vorder- und Rückseite, angeordnet. Egal, welche Anordnung der zwei Anordnungen von Senkungen in den Flächenteilen gewählt wird, es steht sich immer ein Stanzloch mit Senkung und eine Stanzloch ohne Senkung, auf einer gemeinsamen Mittellinie, senkrecht in den Schenkeln eines U-förmigen Profils gegenüber. Die, mit einer Senkung auf der Vorderseite und mit einer Senkung auf der Rückseite eines Stanzteiles versehenen Stanzlöcher, weisen auf der jeweils gegenüber liegenden Seite der Senkung im Flächenteil eine Erhebung oder einen definierten Grat auf. Ein Stanzloch mit Senkung und eine Stanzloch ohne Senkung bilden immer ein Stanzlochpaar, welche durch einen Steg des Verbindungselementes beabstandet ist. Die Schenkel in denen die Stanzlöcher angeordnet sind, sind durch einen Spalt, der sich aus der Stegbreite ergibt, parallel zueinander beabstandet.

Mit einem anderen Herstellverfahren, anstelle von Prägung, können die Senkungen im Stanzteil derart ausgeführt sein, dass die mit einer Senkung auf der Vorderseite und mit einer Senkung auf der Rückseite eines Stanzteiles versehenen Stanzlöcher auf der jeweils gegenüber liegenden Seite des Stanzloches einen definierten Grat aufweisen. Unter einem definierten Grat wird die Ausführungsform und Höhe eines Grates verstanden. Als Ausführungsform kommen beispielsweise kleine Verzahnungen in Frage, wobei die Höhe eines Grates und somit der Verzahnung im Bereich von 0,5 mm bis zu 2 mm liegen kann. Der Grat mit seiner Verzahnung hat die Aufgabe zu verhindern, dass sich ein Verbindungselement nach dem Aufstecken auf eine schmale Längs-und/oder Querkante eines Wandbauelementes, von alleine verschieben kann. Dem Grat kommt die Aufgabe zu, aufgrund der Verzahnung, eine erhöhte Reibung zum Wandbauelement zu erzeugen und somit eine bestimmte Haftung zu gewährleisten. Natürlich kann, unter Aufbringung einer geringen Kraft, das Verbindungselement vom Handwerker verschoben oder wieder entfernt werden, um beispielsweise an einer anderen Stelle wieder eingesetzt zu werden. Durch den Grat haben zwei der vier Innenflächen der Schenkel bzw. Flanken einen hakenförmigen Widerstand, der ein Verbindungselement daran hindert, von einem Wandbauelement herabzufallen, vor allem, wenn die Verbindungselemente seitlich an senkrechten Schmalseiten eines Wandbauelementes aufgesteckt werden. Ist ein Verbindungselement mit seinem ersten U-förmigen Profil auf eine erste Schmalseite eines Wandbauelementes aufgesteckt und wird ein zweites Wandbauelement in das zweite U-förmige Profil eingeschoben, ist es von Vorteil, dass das Verbindungselement eine gewisse Gegenkraft gegen eine Verschiebung aufweist.

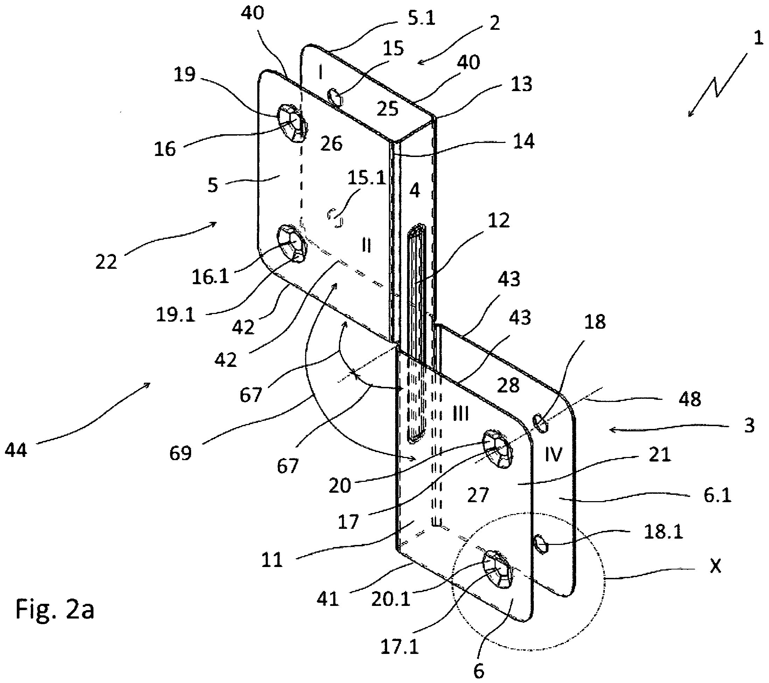

Zusammenfassend lässt sich zum vorgenannten Ausführungsbeispiel folgendes ausführen. Das erfindungsgemäße Verbindungselement, gemäß der Figur 1a iVm. Figur 2a, ermöglicht aufgrund des kreativen Designs eine kostengünstige Herstellung und eine einfache, ergonomische Handhabung. Die kostengünstige und leichte Herstellweise wird dadurch erreicht, dass ein flächiges Stanzteil an entsprechenden Stellen, vorzugsweise an vier vorgegebenen Stellen, Stanzlöcher erhält und an zwei vorgegebenen Linien eingeschnitten wird, sowie an zwei vorgegebenen Linien abgekantet wird, so dass sich ein einbaufertiges Verbindungselement ergibt. Ein solches Verbindungselement kann ohne Hilfsmittel an jeder beliebigen Stelle eines Wandbauelementes aufgesteckt bzw. aufgeschoben werden, um das Handling bei der Montage von Wandbauelementen wesentlich zu verbessern. Durch die beiden U-förmigen Profile werden Wandbauelemente genau ausgerichtet und zueinander gehalten. Durch die beiden U-förmigen Profile können die Wandbauelemente beim Aneinanderstoßen nicht mehr seitlich verrutschen. Zur Herstellung einer kraftschlüssigen Verbindung zwischen einem Verbindungselement und mindestens zwei Wandbauelementen werden einfach zu handhabende Blindnieten verwendet.

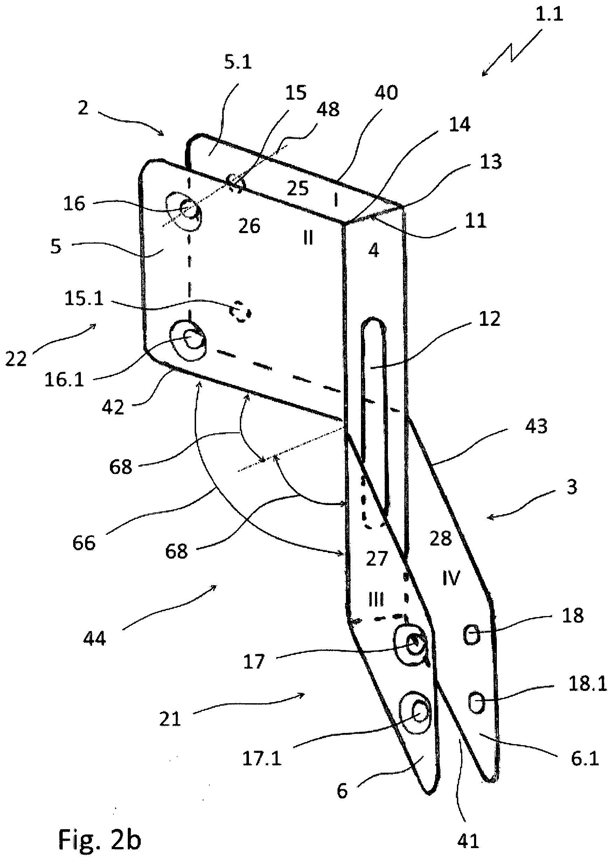

Die Erfindung betrifft in einem weiteren Aspekt auch ein Eckwinkel-Verbindungselement, gemäß der Figur 1a iVm. Figur 2b. Unter einem Eckwinkel wird ein stumpfer Winkel zwischen 90 Grad und 180 Grad zwischen den U-Profilen eines Eckwinkel-Verbindungselementes verstanden. Die beiden U-Profile eines Standard-Verbindungselement sind, zueinander, durch einen gestreckten Winkel von 180 Grad beabstandet. Dadurch weisen die U-Profile eines Standard-Verbindungselementes in entgegengesetzte Richtung, während die beiden U-Profile eines Eckwinkel-Verbindungselementes immer durch einen stumpfen Winkel kleiner 180 Grad zueinander beabstandet sind. Jedes U-Profil ist dabei um einen spitzen Winkel kleiner 90 Grad zum gemeinsamen Steg abgewinkelt. Ein geformtes Eckwinkel-Verbindungselement besteht aus einem einstückigen, gestanzten Blechteil. Es weist die Form eines Doppel-U auf. Ein U-Profil besteht aus zwei, durch einen Steg beanstandete Schenkel. Die U-Profile sind in senkrechter Richtung versetzt angeordnet und schräg gegenüberliegend zum gemeinsamen Steg abgewinkelt. Eckwinkel-Verbindungselemente finden bevorzugt im Dachausbau Verwendung. Dieses Eckwinkel-Verbindungselement ist eine weitere vorteilhafte Ausführung eines Standard-Verbindungselementes. Mit einem Eckwinkel-Verbindungselement kann die Sicherheit bei der Verlegung bzw. dem Handling von Wandbauelementen wesentlich erhöht werden. Das Eckwinkel-Verbindungselement ist ebenfalls ein erfinderisches Verbindungselement zur Verbindung plattenförmiger Bauelemente für den Innenausbau, z.B. für die Verkleidung von Wänden, Decken und/oder zur Erstellung von Leichtbauwänden, vor allem bei schrägen Wänden und Spitzbögen. Bei der Montage solcher Wandbauelemente kommen solche Eckwinkel-Verbindungselemente, vorzugsweise beim Dachausbau, zum Einsatz oder überall dort, wo die Schmalseiten der Wandbauelemente nicht senkrecht, sondern, wie bei einer Dachneigung, unter einem bestimmten Winkel aufeinander stoßen.

Die Dachneigung bezeichnet die Steilheit einer Dachfläche, die als Winkel in Grad, dem sogenannten Dachneigungswinkel, angegeben wird. Der Dachneigungswinkel, der beim klassischen Satteldach überwiegend angewendet wird, beträgt idR. zwischen 20 Grad und 80 Grad, vorzugsweise 45 Grad. Um einen begehbaren Raum zu erhalten, beginnt ein Dachausbau mit Wandbauelementen, idR. mit der Montage von senkrechten Wandbauelementen. An diese senkrechten Wandbauelemente schließen sich dann aufgrund der Dachschräge bzw. Dachneigung die Wandbauelemente an, die unter einem Dachneigungswinkel mit ihren Schmalseiten an die Schmalseiten der senkrecht angeordneten Wandbauelemente anstoßen. Um die Montage der, an die senkrecht angeordneten Wandbauelemente unter einem Winkel anzubringenden Wandbauelemente wesentlich zu vereinfachen, können die Eckwinkel-Verbindungselemente eingesetzt werden. Die an der Dachschräge angeordneten Wandbauelemente werden dann in die Höhe, d.h., in Richtung First, soweit verlegt, bis eine waagerechte Decke aus Wandbauelementen eingezogen werden soll. D.h., an der Stelle, wo die Schmalseiten der, an die Dachschräge angeordneten Wandbauelemente mit den Schmalseiten der waagerechten angeordneten Wandbauelemente zusammenstoßen, entsteht wiederum ein Winkel.

Dieser Winkel zwischen der Dachschräge und der waagerechten Decke korrespondiert mit dem Winkel zwischen den senkrechten Wandbauelementen und der Dachschräge. Da diese Winkel identisch sind, können an beiden Nahtstellen der aneinander liegenden Wandbauelemente die gleichen Eckwinkel-Verbindungselemente eingesetzt werden. Aufgrund unterschiedlicher Dachneigungen, werden entsprechende Eckwinkel-Verbindungselemente mit verschiedenen Winkeln zwischen den Schenkeln der U-förmigen Profile vorgehalten.

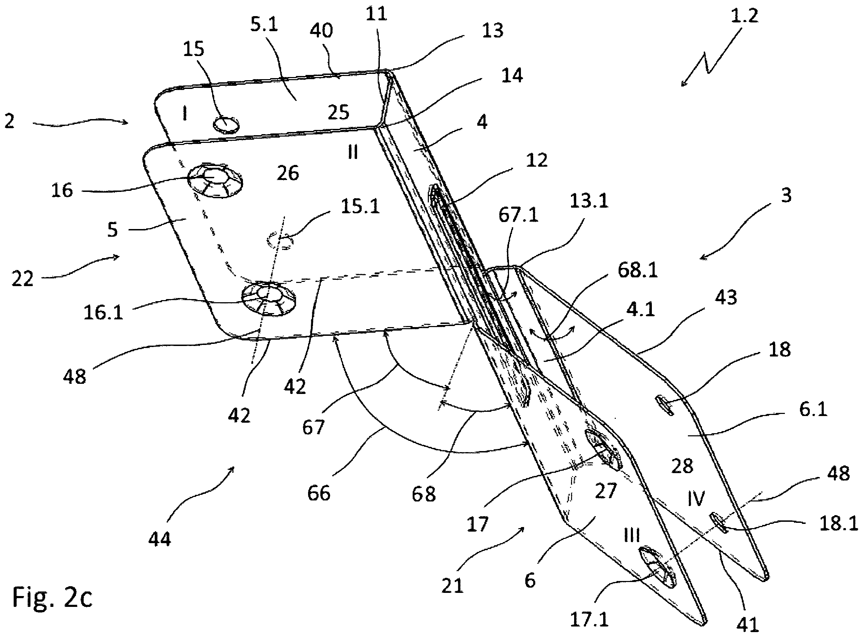

Bei der Herstellung solcher Eckwinkel-Verbindungselemente dient, wie zuvor beschrieben, ein erfinderisches, flächiges mit einer symmetrischen Kontur ausgebildetes Stanzteil, gemäß der Figur 1a, als Basis. Bei der normalen Ausführung eines Verbindungselementes, welches aus zwei versetzt und gegenüberliegenden U-Profilen gebildet ist, sind die U-Profile, gemäß der Figur 2a, um 180 Grad zueinander beabstandet und liegen in einer 180 Grad Ebene. Jeder Schenkel eines U-Profils dieser Ausführungsform steht senkrecht zum Steg. Bei einem Eckwinkel-Verbindungselement hingegen sind die gegenüberliegenden U-Profile in einem bestimmten Winkel zwischen 30 Grad und 180 Grad, gemäß der Figur 2b, 2c, zueinander angeordnet, wodurch sie nicht mehr in einer gleichen Ebene liegen. Werden die umklappbaren Flächenteile, also die Schenkel der U-förmigen Profile, aber zum gemeinsamen verbleibenden Flächenteil, dem Steg, z.B. jeweils um 22,5 Grad aus der Ebene von 180 Grad gebogen, ergibt sich ein Winkel von 135 Grad zwischen den beiden U-förmigen Profilen. Alle Schenkel stehen jetzt nicht mehr senkrecht zum Steg. Durch das Umklappen der Flächenteile zum verbleibenden Flächenteil, dem gemeinsamen Steg, verringert sich aber der Abstand zwischen den Schenkeln eines U-förmigen Profils. Aufgrund eines verringerten Abstandes zwischen den Schenkeln, kann eine bestimmte Wandstärke eines Wandelementes nicht mehr zwischen die Schenkel eines Profils eingeschoben werden. Um dieses Problem zu beheben, wird vorgeschlagen, den gemeinsamen Steg entsprechend zu verbreitern, so dass ein bestimmter Abstand für die Stärke der Wandelemente nach dem Umklappen der Flächenteile, zwischen den Schenkeln, gewährleistet ist. D.h., bei einem Winkel von z.B. 135 Grad zwischen den U-förmigen Profilen, weist der gemeinsame Steg eine bestimmte Breite auf, die breiter ist als die Stegbreite im Basis-Stanzteil. Die Stanzschnitte im flächigen Stanzteil werden nicht mehr so lang ausgeführt. Dadurch ist der Abstand der Stanzschnitte zueinander größer, wodurch die Biegelinien ebenfalls verschoben werden können. Auf diese Art und Weise der Verschiebung der parallel beabstandeten Biegelinien voneinander weg, verbreitert sich automatisch der Steg. Das bedeutet, dass bei jeder Änderung des Winkels zwischen den U-förmigen Profilen jeweils die Stegbreite des gemeinsamen Steges angepasst werden kann. Was im Umkehrschluss bedeutet, dass mit einer Verbreiterung des Steges jeder Winkel zwischen den U-Profilen eingestellt werden kann. Ausgangselement bei der Herstellung eines solchen Eckwinkel-Verbindungselementes bleibt die symmetrische Basis-Ausführungsform eines flächigen Stanzteiles gemäß der Figur 1a. Das hat den Vorteil, dass bei der Herstellung von verschiedenen Ausführungsformen von Eckwinkel-Verbindungselementen mit unterschiedlichen Winkeln zwischen den U-Profilen, gemäß der Figur 2b, immer ein gleiches symmetrisches Stanzteil, gemäß der Figur 1a, benutzt werden kann.

In einer weiteren erfinderischen Ausführungsform bei der Herstellung von Eckwinkel-Verbindungselementen, wird nicht ein flächiges symmetrisches Stanzteil gemäß der Figur 1a benutzt, sondern ein Stanzteil gemäß der Figur 1b. Aus der Figur 1b ist ersichtlich, dass hier nicht die Stegbreite des gemeinsamen Steges für ein Eckwinkel- Verbindungselement verbreitert wird, sondern ein asymmetrisches flächiges Stanzteil als Basiselement zur Herstellung eines Eckwinkel-Verbindungselementes benutzt wird. Asymmetrisch deshalb, weil ein Flächenteil der vier Flächenteile des Stanzteiles vergrößert bzw. verlängert ist, beispielsweise das Flächenteil des Quadranten IV. Bei dieser Ausführungsform von Eckwinkel-Verbindungselementen werden die umklappbaren Flächenteile, die Quadranten I und II, welche ein erstes U-Profil bilden, entsprechend der Ausführungsform, gemäß der Figur 1a, um 90 Grad zum Steg gebogen, während die anderen beiden Flächenteile der Quadranten III und IV, welche das zweite U-Profil bilden, um einen bestimmten Winkel ϕ zum ersten U-Profil gebogen bzw. angeordnet. Die Schenkel des zweiten U-Profils können somit jeden Winkel ϕ zum ersten U-Profil einnehmen, ohne dass der Steg bzw. die Stegbreite einer Änderung bedarf. Damit auch bei dieser Ausführungsform der Abstand zwischen den Schenkeln des zweiten U-Profils gleich bleibt, ist in einem der verlängerten Schenkel eine weitere Biegelinie enthalten, um welche der Schenkel des U-Profils gebogen wird. Diese weitere Biegelinie im verlängerten Flächenteil wiederum kann verschoben werden, um bei unterschiedlichen Winkeln ϕ des zweiten U-Profils zum ersten U-Profil immer einen gleichen Abstand zwischen den Schenkeln des zweiten U-Profils zu gewährleisten. Zwischen der ersten Biegelinie und der weiteren Biegelinie im verlängerten Flächenteil entsteht ein Zwischensteg. Was im Umkehrschluss bedeutet, dass eine Verschiebung der weiteren Biegelinie im verlängerten Flächenteil eine Verbreiterung oder Verkürzung des Zwischensteges, gemäß der Figur 1b, bedeutet. Bei einer Verbreiterung des Zwischensteges vergrößert sich der Abstand zwischen den Schenkeln des zweiten U-Profils, weil durch die Verbreiterung des Zwischensteges der Abstand des einen Schenkels zum Steg größer wird und somit auch zum anderen Schenkel des gleichen U-Profils. Durch Veränderung der Breite des Zwischensteges im zweiten U-Profil, ist jeder Winkel zwischen dem ersten und zweiten U-Profil für ein Eckwinkel-Verbindungselement, gemäß der Figur 2c, einstellbar. Eckwinkel-Verbindungselemente können somit einen Winkel ϑ zwischen den beiden U-Profilen, von 30 Grad bis 180 Grad, aufweisen. Vorzugsweise werden Eckwinkel-Verbindungselemente mit bestimmten Winkeln -9, beispielsweise 90 Grad, 120 Grad, 135 Grad usw., lagermäßig vorgehalten. Ausgangselement bei der Herstellung eines solchen Eckwinkel-Verbindungselementes bleibt die asymmetrische Ausführungsform eines flächigen Stanzteils gemäß der Figur 1b. Das hat den Vorteil, dass bei der Herstellung von verschiedenen Ausführungsformen von Eckwinkel- Verbindungselementen gemäß der Figur 2c, mit unterschiedlichen Winkeln ϑ zwischen den U-Profilen, immer ein gleiches asymmetrisches Stanzteil, gemäß der Figur 1b, benutzt werden kann. Ein Eckwinkel-Verbindungselement zum Verbinden von mindestens zwei Wandbauelementen besteht aus einem einstückigen, aus einem Blechteil gestanzten und geformten Eckwinkel-Verbindungselement. Ein Eckwinkel-Verbindungselement weist die Form eines Doppel-U auf. Ein Doppel-U besteht aus zwei U-Profilen, die einen gemeinsamen Steg aufweisen. Ein U-Profil wiederum besteht aus jeweils zwei, durch einen Steg beabstandete Schenkel bestehen. Die Schenkel eines U-Profils sind in einem rechten Winkel ε zum Steg angeordnet, während die Schenkel des anderen U-Profils, in senkrechter Richtung versetzt und in einem spitzen Winkel ϕ zum Steg angeordnet sind, wodurch die U-Profile sich um einen stumpfen Winkel e, in voneinander abgewandter Richtung, erstrecken. An den gemeinsamen Steg des Eckwinkel-Verbindungselementes schließt sich im U-Profilbereich der Quadranten III-IV ein Zwischensteg an. Der Zwischensteg verlängert im Prinzip das Flächenteil des Quadranten IV, siehe im Stanzteil der Figur 1b. Genau genommen, wird das Flächenteil des Quadranten IV, durch den eingeschobenen Zwischensteg vom Steg beabstandet. Der Zwischensteg weist durch die Einschiebung zwischen Steg und Flächenteil im Quadranten IV zwei Biegelinien auf. Eine Biegelinie betrifft die gemeinsame Biegelinie am Steg, während die andere Biegelinie zwischen dem Zwischensteg und dem Flächenteil des Quadranten IV angeordnet ist. An der zweiten Biegelinie wird das Flächenteil des Quadranten IV gebogen, bis dieses einen parallelen Abstand zum Schenkel des gleichen U-Profils aufweist. Das Flächenteil bildet dann einen Schenkel des U-Profils, der in einem spitzen Winkel ϕ zum Zwischensteg steht.

Konkrete Ausführungsbeispiele der Erfindung sind in den Zeichnungen Fig. 1 bis Fig.4b rein schematisch dargestellt und werden nachfolgend näher beschrieben. Weitere Details und Ausgestaltungen der Erfindung lassen sich der nachfolgenden gegenständlichen Beschreibung und den Zeichnungen entnehmen. Es zeigt:
- Fig. 1a: ein erfindungsgemäßes flächiges Stanzteil in einer Ausführungsform für ein Verbindungselement mit in vertikaler Richtung angeordneten Befestigungsöffnungen, und
- Fig. 1b: ein weiteres erfindungsgemäßes Ausführungsbeispiel eines flachen Stanzteiles für ein Eckwinkel-Verbindungselement, und
- Fig. 1c: ein erfindungsgemäßes flächiges Stanzteil in einer Ausführungsform für ein Verbindungselement mit in horizontaler Richtung angeordneten Befestigungsöffnungen, und
- Fig.2a: ein erfindungsgemäßes, ausgeformtes Verbindungselement mit in vertikaler Richtung angeordneten Befestigungsöffnungen, in schematischer Darstellung gemäß der Fig. 1a, und
- Fig.2b: ein erfindungsgemäßes, ausgeformtes Eckwinkel-Verbindungselement in schematischer Darstellung gemäß der Fig. 1a, und
- Fig.2c: ein erfindungsgemäßes, ausgeformtes Eckwinkel-Verbindungselement in schematischer Darstellung gemäß der Fig. 1b, und
- Fig.2d: ein erfindungsgemäßes, ausgeformtes Verbindungselement mit in horizontaler Richtung angeordneten Befestigungsöffnungen, in schematischer Darstellung gemäß der Fig. 1c, und
- Fig.3: im Querschnitt eine Ausführungsform eines Stanzloches im Verbindungselement, und
- Fig.4a, 4b: in schematischer Darstellung ein erfinderisches Eckwinkel-Verbindungselement im Einsatz beim Dachausbau.

Die **Fig.1a** zeigt ein erstes konkretes Ausführungsbeispiel eines, aus einem flachen Walzfertigprodukt aus Metall und im nachgeschalteten Stanzprozess hergestelltes einstückiges Blechteil. Dieses flächige und einstückige Blechteil erhält nachstehend die Bezeichnung Stanzteil **7.** Im nachfolgenden Biegeprozess entsteht aus dem Stanzteil **7** durch Abkanten ein Verbindungselement **1,** siehe **Figur 2a****.** Im Wesentlichen besteht das erfindungsgemäße Verbindungselement **1,** wie in der Beschreibung zuvor aufgezeigt, aus einem flächigen Stanzteil **7,** das in etwa eine quadratische Form aufweist, die an den Ecken abgerundet ist. Des Weiteren sind in der quadratischen Form zwei annähernde V-Ausschnitte **30, 31** oder Radien an der horizontalen Mittelllinie **32** ausgebildet. Auf der horizontalen Mittellinie **32** sind zwei Stanzschnitte **9, 10** angeordnet, die an der Außenkante **23, 24** im V-Ausschnitt **30, 31** beginnen und in Richtung der Mitte des Stanzteiles 7 verlaufen. Die beiden, auf der gleichen Mittellinie **32** verlaufenden Stanzschnitte **9, 10** sind zueinander beabstandet. Der Abstand der beiden Stanzschnitte **9, 10** bildet eine Stegbreite **11,** die durch Biegelinien **13, 14** gekennzeichnet ist. Am Ende der aufeinander zulaufenden Stanzschnitte **9, 10** befindet sich jeweils eine Biegelinie **13, 14.** Die beiden Biegelinien **13, 14** sind senkrecht zu den beiden Stanzschnitten **9, 10** und parallel zur senkrechten Mittellinie **33** angeordnet. Zwischen den Stanzschnitten **9, 10** und den Biegelinien **13, 14** ergeben sich vier Quadranten **I - IV** als Flächenteile **25, 26, 27, 28.** Diese Flächenteile **25, 26, 27, 28** sind als rechteckige Flächenteile **25, 26, 27, 28** am Steg **4** angeordnet und parallel zur Mittellinie **33** beabstandet. Die längere Seite der rechteckigen Fläche **25, 26, 27, 28** bildet mit der Biegelinie **13, 14** eine gemeinsame Kante und ist von der Mittellinie **33** parallel beabstandet. Die kürzere Seite besteht aus der Außenkante **40, 41** der rechteckigen Fläche **25, 26, 27, 28,** welche die Länge der Schenkel **5, 5.1, 6, 6.1** der U-Profile **2, 3** bilden und die senkrecht zur Mittellinie **33** verlaufen. In diesen Flächenteilen **25, 26, 27, 28** sind Stanzlöcher **15, 15.1, 16, 16.1, 17, 17.1, 18, 18.1** angeordnet, pro Flächenteil **25, 26, 27, 28** jeweils zwei Stanzlöcher **15, 15.1, 16, 16.1, 17, 17.1, 18, 18.1.** Diese Stanzlöcher **15, 15.1, 16, 16.1, 17, 17.1, 18, 18.1** sind von der senkrechten Mittellinie **33** des Stanzteiles 7 parallel beabstandet. Der parallele Abstand **34, 35** wird durch die beiden senkrechten Mittelinien **36, 37** gebildet, welche jeweils zwei Flächenteile **25, 28** und **26, 27** der Quadranten **II, III und I, IV** durchlaufen. Die auf der Mittelllinie **36** angeordneten Stanzlöcher **15, 15.1, 18, 18.1** korrespondieren mit den auf der Mittellinie **37** angeordneten Stanzlöchern **16, 16.1, 17, 17.1.** Nach dem Biegen der Flächenteile **25, 26** entlang der Biegelinien **13, 14** sind die Stanzlöcher **15, 15.1, 16, 16.1** miteinander deckungsgleich, d.h., sie haben jetzt eine gemeinsame Mittellinie **48,** siehe **Figur 2a** und **Figur 3****.** Das gleiche trifft auch auf die Flächenteile **27, 28** und deren Stanzlöcher **17, 17.1, 18, 18.1** zu, die ebenfalls nach dem Biegen um die Biegelinien **13, 14** deckungsgleich sind. Der Abstand **38, 38.1** der Stanzlöcher **15.1, 16.1, 17, 18** von der horizontalen Mittellinie **32** und somit vom Stanzschnitt **9, 10** beträgt in etwa 1/5 der Gesamtlänge eines Flächenteiles **25, 26, 27, 28,** während der Abstand **39, 39.1** der Stanzlöcher **15, 16, 17.1, 18.1** von der horizontalen Mittellinie **32** in etwa 4/5 der Gesamtlänge eines Flächenteiles **25, 26, 27, 28** entspricht. Die Stanzlöcher **15, 15.1, 18, 18.1** sind auf der Mittellinie **36** und die Stanzlöcher **16, 16.1, 17, 17.1** sind auf der Mittellinie **37** in vertikaler Richtung übereinander angeordnet.

Zwischen den beiden Biegelinien **13, 14** ergibt sich ein von der Außenkante **40** bis zur Außenkante **41** durchlaufender Steg **4,** der ein Flächenteil **29** bildet. Die Stegbreite **11** entspricht der Dicke eines Wandbauelementes. Dieser Steg **4** ist um die Mittellinie **33** symmetrisch angeordnet und ist der gemeinsame Steg **4** von allen vier Flächenteilen **25, 26, 27, 28,** obwohl die Flächenteile **25, 26** von den Flächenteilen **27, 28** durch einen Stanzschnitt **9, 10** getrennt sind. Des Weiteren weist der Steg **4** eine Sicke **12** auf. Die Sicke **12** entspricht der Form einer rinnenförmigen Vertiefung **12.** Die rinnenförmige Vertiefung **12** ist symmetrisch zur senkrechten Mittellinie **33** angeordnet und auf der Vorderseite **22** des Stanzteiles **7** eingeprägt. Auf der Rückseite des Steges **4** bildet sich entsprechend der Vertiefung **12** eine korrespondierende Erhöhung. Der Verlauf der Sicke **12** ist somit längs des Steges **4,** wobei die Sicke **12** eine Länge aufweist, die ungefähr der Hälfte, der Gesamtlänge des Stanzteiles **7** entspricht. Eine Hälfte der Länge der Sicke **12** entfällt, von der horizontalen Mittellinie **32** aus betrachtet, auf den Stegabschnitt im I und II Quadranten, während die andere Hälfte der Sicke **12** im Stegabschnitt vom III und IV Quadranten angeordnet ist. Das Verbindungselement **1** verfügt somit über einen verstärkten Mittelsteg **4,** von dem aus sich vier Flächenteile **25, 26, 27, 28** in einander entgegengesetzte Richtungen erstrecken.

Die vier Flächenteile **25, 26, 27, 28** verfügen zusammen über acht Stanzlöcher **15, 15.1, 16, 16.1, 17, 17.1, 18, 18.1,** wovon jeweils zwei als ein Stanzlochpaar miteinander korrespondieren. D.h., das Stanzlochpaar **15** und **16** sowie das Stanzlochpaar **15.1** und **16.1** korrespondieren miteinander und sind somit deckungsgleich. Das gleiche trifft auf die Stanzlochpaare **17** und **18** sowie auf die Stanzlochpaare **17.1** und **18.1** zu. Vorteilhafterweise ist jeweils ein Stanzloch **16, 16.1, 17, 17.1** von einem Stanzlochpaar **15, 16** u. **15.1, 16.1** u. **17, 18** u. **17.1, 18.1** mit einer Senkung **19, 19.1, 20, 20.1** versehen. Die Senkung **20, 20.1** an den beiden Stanzlochpaaren **17, 17.1** ist auf der Rückseite **21** des Flächenteils **27** des Stanzteiles **7** eingebracht, während die Senkung **19, 19.1** an den beiden Stanzlochpaaren **16, 16.1** auf der Vorderseite **22** des Flächenteiles **26** des Stanzteiles **7** eingebracht ist. Die Stanzlöcher **15, 16** sind auf einer Mittellinie **70** und die Stanzlöcher **15.1, 16.1** auf einer Mittellinie **71** und die Stanzlöcher **17, 18** auf einer Mittellinie **72** und die Stanzlöcher **17.1, 18.1** auf einer Mittellinie **73** angeordnet, wobei die Mittelllinien **70, 71, 72, 73** parallel zur Mittellinie **32** und zur Außenkante **40, 41** beabstandet sind und zu der Mittellinie **32** einen Abstand **38, 38.1, 39, 39.1** aufweisen. Dieses Stanzteil 7 bildet die Basis für das Verbindungselement **1** gemäß der **Figur 2a****.** Bei der Herstellung des Verbindungselementes **1,** gemäß **Figur 2a****,** werden die vier Flächenteile **25, 26, 27, 28** gegenüber dem Steg **4** alle um den gleichen Winkel ε **67,** vorzugsweise 90 Grad, zu einem U-Profil **2, 3** gebogen, wodurch der parallele Abstand der Schenkel **5, 5.1** und **6, 6.1** identisch zueinander bleibt. Ein rechter Biegewinkel ε **67** sorgt dafür, dass alle Schenkel **5, 5.1** und **6, 6.1** senkrecht zum gemeinsamen Steg **4** stehen.

Des Weiteren bildet das Stanzteil **7** die Basis für ein Eckwinkel-Verbindungselement **1.1** gemäß der **Figur 2b****.** Bei der Herstellung eines Eckwinkel-Verbindungselementes **1.1** gemäß der **Figur 2b****,** werden alle Flächenteile **25, 26, 27, 28** um den gleichen Winkel ϕ **68** gebogen, aber nicht um einen rechten Biegewinkel ε **67** von 90 Grad, sondern nur um einen Biegewinkel ϕ **68** von beispielsweise jeweils 67,5 Grad, woraus sich ein Gesamtwinkel ϑ **66** von 135 Grad als Abstand zwischen den U-Profilen **2, 3** ergibt. Die Schenkel **5, 5.1** und **6, 6.1** sind wiederum parallel beabstandet, aber stehen nicht mehr senkrecht zum gemeinsamen Steg **4,** sondern schräg zu diesem angeordnet. Dadurch ändert sich der parallele Abstand zwischen den Schenkeln **5, 5.1** und **6, 6.1** zueinander und der Abstand verringert sich. Der Verringerung des Abstandes kann durch eine Verbreiterung des Steges **4** entgegen gewirkt werden, wodurch der benötigte parallele Abstand der Schenkel **5, 5.1** und **6, 6.1** wieder hergestellt werden kann, siehe **Figur 2b****.** Einander entsprechende Bezeichnungen aus der **Figur 1a** sind in den **Figuren 1b****,** **2a****,** **2b****,** **2c****,** **3****,** **4a** und **4b** mit den gleichen Bezugszeichen versehen.

In der **Fig.1b** wird ein weiteres konkretes Ausführungsbeispiel eines flächigen Stanzteiles **7.1** für ein Eckwinkel-Verbindungselement **1.2** schematisch aufzeigt. Bei diesem zweiten Ausführungsbeispiel handelt es um ein Werkstück, bestehend aus einem flachen Stanzteil **7.1,** welches zur Herstellung eines Eckwinkel-Verbindungselementes **1.1** in Biegetechnik Verwendung findet. Dieses Stanzteil 7 bildet die Basis für das Eckwinkel-Verbindungselement **1.2** gemäß der **Figur 2b****.** Das Stanzteil **7.1** weist drei identische Flächenteile **25, 26, 27** mit den zugehörigen Quadranten **I, II, III,** wie bereits aus der **Figur 1a** bekannt, auf. Daher kann die Beschreibung aus der **Figur 1a** hier für die Beschreibung der **Figur 1b** herangezogen werden. Diese drei Flächenteile **25, 26, 27** sind mit den entsprechenden Stanzlöchern **15, 15.1, 16, 16.1, 17, 17.1** versehen und, gemäß dem ersten Ausführungsbeispiel, weiterhin symmetrisch um die senkrechte Mittellinie **33** angeordnet. Der Unterschied zwischen dem Stanzteil **7,** aus dem das Verbindungselement **1** gebildet ist und dem Stanzteil **7.1,** aus dem das Eckwinkel-Verbindungselement **1.1** gebildet wird, besteht darin, dass das Flächenteil **28** des Quadranten **IV** eine andere Größe aufweist. Die Größenänderung des Flächenteils **28** besteht in der Größenänderung des Abstandes der Außenkante **23** zur Mittellinie **33.** Aufgrund dieser unterschiedlichen Größe ist das Stanzteil **7.1** asymmetrisch ausgebildet. Die Asymmetrie bezieht sich aber nur auf den Unterschied zwischen dem Flächenteil **27** und dem Flächenteil **28** der Quadranten **III** und **IV,** die weiterhin um die gleiche Mittellinie **33** senkrecht dazu angeordnet sind. Beim Stanzteil **7** ist die Länge des Flächenteiles **27** von der Mittellinie **33** bis zur Außenkante **24** identisch mit der Länge des Flächenteiles **28,** welches ebenfalls von der Mittellinie **33** bis zur Außenkante **23** verläuft. Maßgebend ist aber Abstand **35** der Stanzlöcher **17, 17.1** im Quadranten **III** zur Biegelinie **14** und der korrespondierende Abstand **34** der Stanzlöcher **18, 18.1** im Quadranten **IV** zur Biegelinie **13.1.** Diese beide Abstände **34, 35** müssen identisch sein.

Bei der Herstellung des Eckwinkel-Verbindungselementes **1.2** gemäß der **Figur 2c****,** werden nur die Flächenteile **25, 26** um den gleichen Winkel ε **67,** vorzugsweise 90 Grad, zu einem U-Profil **2** gebogen, während die Flächenteile **27, 28** aber nicht um 90 Grad, sondern nur um den Winkel ϕ **68** von beispielsweise 45 Grad zum Steg **4** zu einem U-Profil **3** gebogen werden. Daraus ergibt sich ein Gesamtwinkel ϑ **66** von 135 Grad zwischen den beiden U-Profilen **2, 3.** Die Schenkel **5, 5.1** des U-Profils **2** stehen aufgrund des rechten Winkels ε **67** senkrecht zum Steg **4,** während die Schenkel **6, 6.1** aufgrund des anderen Biegewinkels ϕ **68** schräg zum Steg **4** angeordnet sind. Aber auch hier würde sich der parallele Abstand zwischen den 1 Schenkeln **6, 6.1** des U-Profils 3 verringern. Um diese Verringerung auszugleichen, wird erfindungsgemäß vorgeschlagen, beim Stanzteil **7.1,** das Flächenteil **28** zu verlängern. Die Verlängerung bildet einen Zwischensteg **4.1.** Der Zwischensteg **4.1** ist einerseits am Steg **4** angelenkt und andererseits am Schenkel **6.1** des U-Profils **3.** Die Begrenzung des Zwischensteges **4.1** erfolgt durch die Biegelinie **13** und Biegelinie **13.1.** Die Breite **11.1** des Zwischensteges **4.1** wirkt der Verringerung des parallelen Abstandes zwischen Schenkeln **6, 6.1,** beim Biegeprozess, entgegen. Die Veränderung des parallelen Abstandes zwischen den Schenkeln **6, 6.1** wird durch den Biegewinkel ϑ **66,** siehe **Figur 2c****,** beeinflusst, wobei der Biegewinkel ϑ **66** den Abstand zwischen dem U-Profil **2** und U-Profil **3** angibt. Der Winkel -9 **66** ist ein stumpfer Winkel, welcher wiederum aus den zwei Winkeln ε **67** und ϕ **68** gebildet wird. Der Winkel ε **67** bildet den rechten Winkel zwischen dem Steg **4** und den Schenkeln **5, 5.1** des U-Profils **2,** während der Winkel ϕ **68** den spitzen Winkel zwischen dem Steg **4** und den Schenkeln **6, 6.1** des U-Profils **3** bildet. Je spitzer der Winkel ϕ **68** wird, umso breiter muss der Zwischensteg **4.1** werden, damit der gleiche benötigte parallele Abstand zwischen den Schenkeln **6, 6.1** gewährleistet bleibt. Der benötigte Abstand zwischen den Schenkeln **6, 6.1** eines U-Profils 3 wird durch die Wandstärke eines Wandelementes **47** bestimmt. Auch wenn sich die Breite des Zwischensteges **11.1** vergrößert, wird das Abstandsmaß **34** zwischen der Biegelinie **13.1** und der Mittellinie **36.1,** welche durch die Stanzlöcher **18, 18.1** verläuft, konstant gehalten. Damit wird gewährleistet, dass die Stanzlöcher **18, 18.1** nach dem Biegevorgang der Flächenteile **27, 28** mit den Stanzlöchern **17, 17.1** korrespondieren und diese eine gemeinsame Mittellinie **73** aufweisen.

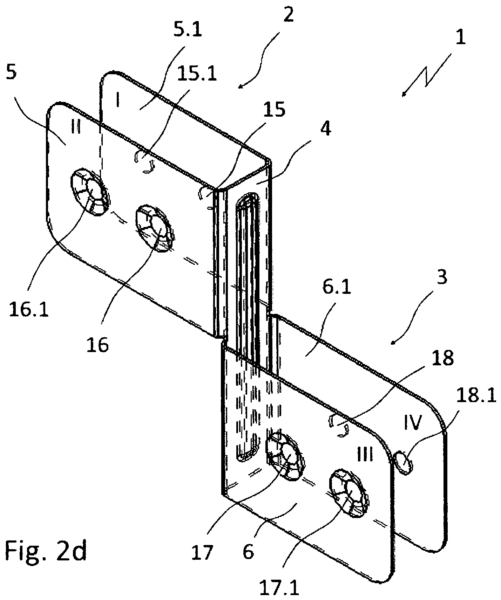

In der **Fig.1c** wird ein weiteres konkretes Ausführungsbeispiel eines flächigen Stanzteiles **7.2,** ausgehend von der **Figur 1a****,** aufgezeigt. Im nachfolgenden Biegeprozess entsteht aus dem Stanzteil **7.2** ebenfalls ein Verbindungselement **1** gemäß der **Figur 2d****.** Ein Teil der Beschreibung zum flächigen Stanzteil **7.2** kann der **Figur 1a** entnommen werden. Einander entsprechende Bezugszeichen werden hier in der **Figur 1c** ebenfalls analog übernommen. D.h., der Steg **4** und die rinnenförmige Vertiefung **12,** angeordnet an der senkrechten Mittellinie **33** sowie die beiden Stanzschnitte **9, 10** an der horizontalen Mittellinie **32,** sind mit dem Stanzteil **7** aus der **Figur 1a** identisch. Nur die Unterschiede zu der **Figur 1a** werden hier herausgestellt. Dieses Stanzteil **7.2** bildet die Basis für ein Verbindungselement **1** gemäß der **Figur 2d****.** Das Stanzteil **7.2** weist vier identische Flächenteile **25, 26, 27, 28** mit den zugehörigen Quadranten **I, II, III, IV,** wie bereits aus der **Figur 1a** bekannt, auf. Auch diese Flächenteile **25, 26, 27, 28** werden durch die Außenkanten **23, 24, 40, 41** begrenzt, wobei die Länge der Außenkanten **23, 24, 40, 41** die Größe der Flächenteile **25, 26, 27, 28** bestimmt. Beim Stanzteil **7** im Ausführungsbeispiel gemäß der **Figur 1a** sind die Längen der Außenkanten **23, 24, 40, 41** so dimensioniert, dass sich für das Stanzteil 7 in etwa ein Quadrat ergibt. Die Längen der Außenkanten **40** zu **24** bzw. **41** zu **23** weisen zueinander ungefähr ein Verhältnis von 1:1 auf. Aufgrund der Stanzschnitte **9, 10** werden dem Quadrat vier Flächenteile **25, 26, 27, 28** gebildet, die jeweils ein Rechteck bilden, wobei die innen liegenden Längsseiten der rechteckigen Flächenteile **25, 26, 27, 28** mit den Biegelinien **13, 14** korrespondieren und die kurzen Außenkanten **40, 41** (kurzen Längsseiten der rechteckigen Flächenteile **25, 26, 27, 28**) die Länge eines Schenkels **5, 5.1, 6, 6.1** bestimmen. Aus kurzen Außenkanten **40, 41** ergeben sich kurze Schenkel **5, 5.1, 6, 6.1** für ein Verbindungselement **1,** bei welchem die Befestigungsöffnungen (Stanzlöcher **15, 15.1, 18, 18.1, 16, 16.1, 17, 17.1**) vertikal angeordnet sind. Im vorliegenden Ausführungsbeispiel des Stanzteiles **7.2** sind die Längen der Außenkanten **40, 41** derart dimensioniert, dass sich für das Stanzteil **7.2** ein Rechteck ergibt. Die Längen der Außenkanten **40** zu **24** bzw. **41** zu **23** weisen zueinander ungefähr ein Verhältnis von 1.6:1 auf. D.h., die Außenkante **40, 41** ist wesentlich länger ausgeführt als die Außenkante **23, 24.** Dieses Rechteck wird wieder in vier Flächenteile **25, 26, 27, 28** aufgeteilt, die wiederum jeweils ein Rechteck bilden, wobei jetzt die kurzen Längsseiten der rechteckigen Flächenteile **25, 26, 27, 28** mit den Biegelinien **13, 14** korrespondieren und die senkrecht zur Mittelinie **33** angeordneten längeren Außenkanten **40, 41** lange Schenkel **5, 5.1, 6, 6.1** für ein Verbindungselement **1** bilden, bei welchem die Befestigungsöffnungen (Stanzlöcher **15, 15.1, 16, 16.1** und die Stanzlöcher **17, 17.1, 18, 18.1**,) horizontal auf einer Mittellinie **74, 75** angeordnet sind. Die Anzahl der Stanzlöcher in den Quadranten **I, II, III, IV** des Stanzteiles **7.2** ist identisch mit der Ausführungsform des Stanzteiles **7,** nur die Anordnung wurde verändert, um den Anforderungen bei der Montage im Bauwesen zu genügen. Der Abstand **34, 35** der Stanzlöcher **15, 18** und **16, 17** im Stanzteil **7.2** zur Biegelinie **13, 14** ist annähernd gleich dem Abstand **34, 35** der Stanzlöcher **15, 15.1, 18, 18.1** und **16, 16.1, 17, 17.1** im Stanzteil 7 gemäß der **Figur 1a****,** während der Abstand **78, 79** der Stanzlöcher **15.1, 18.1** und **16.1, 17.1** von der Biegelinie **13, 14** wesentlich größer ist und sich aus dem Abstand **34, 35 zur Biegelinie 13, 14** und aus dem Abstand **76, 77** der Stanzlöchern **15, 15.1** und **16, 16.1** sowie **17, 17.1** und **18, 18.1,** zueinander ergibt.

Die **Fig.2a** zeigt in schematischer Darstellung, auf Basis des Stanzteiles **7** gemäß der **Figur 1a****,** ein erfindungsgemäßes Verbindungselement **1** nach dem Biegevorgang. Die in der **Fig.1a** aufgezeigten Bezugszeichen werden hier deshalb analog übernommen. Die beiden Flächenteile **25, 26** der Quadranten **I, II** sind entlang der Biegelinien **13, 14** um jeweils 90 Grad nach hinten gebogen und bilden die Schenkel **5, 5.1** des U-förmigen Profils **2,** wobei die Schenkel **5, 5.1** weitestgehend parallel zueinander verlaufen. Der Steg **4** mit seiner rinnenförmigen Vertiefung **12** verbleibt in seiner Position, wodurch sich ein U-förmiges Profil **2** ergibt. Die beiden Stanzlochpaare **15, 16** und **15.1, 16.1** stehen sich senkrecht und nur durch die Stegbreite **11** beabstandet, gegenüber und weisen jetzt eine gemeinsame Mittellinie **48** auf. Die beiden Stanzlinien **9, 10,** gemäß der **Figur 1a****,** bilden jetzt eine Außenkante **42,** die parallel beabstandet zur Außenkante **40** verlaufen. Analog dazu wurden die beiden Flächenteile **27, 28** der Quadranten **III, IV** ebenfalls entlang der Biegelinien **13, 14** um 90 Grad nach vorne gebogen, welche jetzt die Schenkel **6, 6.1** des U-förmigen Profils **3** bilden. Auch diese Schenkel **6, 6.1** verlaufen weitestgehend parallel zueinander. Die Schenkel **6, 6.1** des U-förmigen Profils **3** weisen zu den versetzt gegenüberliegenden Schenkeln **5, 5.1** des U-Profils **2** in die entgegengesetzte Richtung. Das bedeutet, dass das U-förmige Profil **2,** welches nach hinten gebogen ist, zum U-förmigen Profil 3, welches nach vorne gebogen ist, um 180 Grad beabstandet ist. Die Öffnungen der U-Profile **2, 3** weisen somit in die entgegengesetzte Richtung. Die beiden Stanzlochpaare **17, 18** und **17.1, 18.1** stehen sich jetzt ebenfalls senkrecht, nur durch die Stegbreite **11** beabstandet, gegenüber und weisen eine gemeinsame Mittellinie **48** auf. Auch hier bilden die beiden Stanzlinien **9, 10,** gemäß der **Figur 1a****,** eine Außenkante **43,** die parallel beabstandet zur Außenkante **41** verlaufen. Die Vorderseite **22** des Flächenteiles **26** des Quadranten **II** bildet jetzt mit der Rückseite **21** des Flächenteiles **27** eine gemeinsame Vorderfläche **44,** welche der Bedienseite des Verbindungselementes **1** entspricht. Die gemeinsame Vorderfläche **44** der Bedienseite wird durch die verwendeten Biegewinkel ε **67** erreicht. Alle Flächenteile **25, 26, 27, 28** werden um den gleichen Winkel ε **67,** von vorzugsweise 90 Grad, zu einem U-Profil **2, 3** gebogen, wodurch die Schenkel **5, 5.1, 6, 6.1** U-förmige Profile **2, 3** bilden. Ein rechter Biegewinkel ε **67** sorgt dafür, dass alle Schenkel **5, 5.1** und **6, 6.1** senkrecht zum gemeinsamen Steg **4** stehen. Zwischen den beiden U-förmigen Profilen **2, 3** entsteht ein gestreckter Winkel e **69,** der aus den beiden rechten Winkeln ε **67** gebildet ist, wodurch die gemeinsame Vorderfläche **44** der Bedienseite in einer Ebene liegt. An der Bedienseite eines Verbindungselementes **1** sind Senkungen **19, 19.1, 20, 20.1** in den Stanzlöchern **16, 16.1, 17, 17.1** für das Einführen von Blindnieten **45** eingebracht. Ein Stanzlochpaar **17.1, 18.1** als Ausschnitt **X** aus der **Fig. 2a** wird in der **Fig.3** näher dargestellt.

Die **Fig.2b** zeigt in schematischer Darstellung, auf Basis des Stanzteiles **7,** gemäß der **Figur 1a****,** ein erfindungsgemäßes Eckwinkel-Verbindungselement **1.1** nach dem Biegevorgang. Die in der **Fig.1a** aufgezeigten Bezugszeichen werden hier analog übernommen. Die beiden Flächenteile **25, 26** der Quadranten **I, II** sind entlang der Biegelinien **13, 14** um jeweils 67,5 Grad nach hinten gebogen und bilden die Schenkel **5, 5.1** des U-förmigen Profils **2,** wobei die Schenkel **5, 5.1** weitestgehend parallel zueinander verlaufen. Der Steg **4** mit seiner rinnenförmigen Vertiefung **12** verbleibt in seiner Position, wodurch sich annähernd ein U-förmiges Profil **2** ergibt. Die beiden Stanzlochpaare **15, 16** und **15.1, 16.1** stehen sich jetzt senkrecht und nur durch die Stegbreite **11** beabstandet, gegenüber. Die beiden Stanzlinien **9, 10,** gemäß der **Figur 1a****,** bilden jetzt eine Außenkante **42,** die parallel beabstandet zur Außenkante **40** verlaufen. Analog dazu wurden die beiden Flächenteile **27, 28** der Quadranten **III, IV** ebenfalls entlang der Biegelinien **13, 14** um 67,5 Grad nach vorne gebogen, welche jetzt die Schenkel **6, 6.1** des U-förmigen Profils **3** bilden. Auch diese Schenkel **6, 6.1** verlaufen weitestgehend parallel zueinander. Die Schenkel **6, 6.1** des U-förmigen Profils **3** weisen aber, im Gegensatz zu den Flächenteilen **25, 26** der Quadranten **I, II** bzw. zu den Schenkeln **5, 5.1,** ungefähr in die entgegengesetzte Richtung. Auch hier wird ein U-förmiges Profil **3** gebildet, welches zum U-förmigen Profil **2** um 135 Grad abgewinkelt annähernd in die entgegengesetzte Richtung weist. Der Steg **4** mit seiner Vertiefung **12** verbleibt in seiner Position zwischen den Schenkeln **5, 5.1, 6, 6.1.** Alle Schenkel **5, 5.1, 6, 6.1** sind aber schräg zum Steg **4** angeordnet, weil sie nicht unter einem Winkel ε **67** von 90 Grad, sondern mit einem Winkel ϕ **68** von 67,5 Grad abgekantet wurden. Die beiden Stanzlochpaare **17, 18** und **17.1, 18.1** stehen sich jetzt ebenfalls senkrecht, nur durch die Stegbreite **11** beabstandet, gegenüber. Auch hier bilden die beiden Stanzlinien **9, 10,** gemäß der **Figur 1a****,** jetzt eine Außenkante **43,** die parallel beabstandet zur Außenkante **41** verlaufen. Die Vorderseite **22** des Flächenteiles **26** des Quadranten **II** bildet jetzt mit der Rückseite **21** des Flächenteiles **27** eine gemeinsame Vorderseite **44.** Die gemeinsame Vorderseite **44** entspricht der Bedienseite des Verbindungselementes **1.1.** Die gemeinsame Vorderseite **44** der Bedienseite wird durch die verwendeten Biegewinkel ϕ **68** erreicht. Alle Flächenteile **25, 26, 27, 28** werden um den gleichen Winkel ϕ **68,** von vorzugsweise 67,5 Grad zu einem U-Profil **2, 3** gebogen, wodurch die Schenkel **5, 5.1, 6, 6.1** U-förmige Profile **2, 3** bilden. Ein spitzer Biegewinkel ϕ **68** sorgt dafür, dass alle Schenkel **5, 5.1** und **6, 6.1** schräg zum gemeinsamen Steg **4** verlaufen. Zwischen den beiden U-förmigen Profilen **2, 3** entsteht auf der Vorderseite **22** ein stumpfer Winkel ϑ **66,** der aus den beiden spitzen Winkeln ϕ **68** gebildet ist. Die gemeinsame Bedienseite der Schenkel **5, 6** verbleibt, obwohl die U-Profile **2, 3** zueinander abgewinkelt angeordnet sind, trotzdem auf der Vorderseite **44** eines Eckwinkel-Verbindungselementes **1.1.** Des Weiteren sind an der Bedienseite eines Eckwinkel-Verbindungselementes **1.1** in den Stanzlöchern **16, 16.1, 17, 17.1** Senkungen **19, 19.1, 20, 20.1** für das Einführen von Blindnieten **45,** gemäß der nachstehenden **Figur 3****,** vorgesehen.

Die **Fig.2c** zeigt in schematischer Darstellung, auf Basis des Stanzteiles **7.1,** gemäß der **Figur 1b****,** ein erfindungsgemäßes Eckwinkel-Verbindungselement **1.2** nach dem Biegevorgang. Die in der **Fig.1b** aufgezeigten Bezugszeichen werden hier analog übernommen. Die beiden Flächenteile **25, 26** der Quadranten **I, II** sind entlang der Biegelinien **13, 14** um jeweils 90 Grad nach hinten gebogen und bilden die Schenkel **5, 5.1** des U-förmigen Profils **2,** wobei die Schenkel **5, 5.1** weitestgehend parallel zueinander verlaufen. Der Steg **4** mit seiner rinnenförmigen Vertiefung **12** verbleibt in seiner Position, wodurch sich ein U-förmiges Profil **2** ergibt. Die beiden Stanzlochpaare **15, 16** und **15.1, 16.1** stehen sich jetzt senkrecht und nur durch die Stegbreite **11** beabstandet, gegenüber und weisen jetzt eine gemeinsame Mittellinie **48** auf. Die beiden Stanzlinien **9, 10,** gemäß der **Figur 1b****,** bilden jetzt eine Außenkante **42,** die parallel beabstandet zur Außenkante **40** verlaufen. Analog dazu wurden das Flächenteil **27** des Quadranten **III** ebenfalls entlang der Biegelinie **14** aber nur um 45 Grad nach Vorne gebogen, welches jetzt den Schenkel **6** eines U-förmigen Profils **3** bildet. Entgegen den Angaben in der **Figur 2a****,** ist nicht das Flächenteil **28** um die Biegelinie **13** zu einem Schenkel **6.1** gebogen, um ein U-Profil **3** zu erhalten, sondern jetzt der Zwischensteg **4.1.** Der Zwischensteg **4.1,** der sich unmittelbar seitlich an den Steg **4** anschließt, ist an der Biegelinie **13** um 90 Grad nach vorne gebogen. Der Zwischensteg **4.1** ist, wie der Schenkel **6.1** aus der **Figur 2a** um 90 Grad nach Vorne gebogen und steht somit senkrecht zum Steg **4.** An der Biegelinie **13.1** ist jetzt das Flächenteil **28,** welches mit den anderen Flächenteilen **28** aus den Figuren **1a****,** **2a****,** **2b** identisch ist, wie das Flächenteil **27** um 45 Grad nach vorne gebogen. Das abgewinkelte Flächenteil **28** bildet jetzt den Schenkel **6.1.** Damit verlaufen die Schenkel **6** und **6.1** in die gleiche Richtung und sind weitestgehend parallel zueinander beabstandet, wobei beide Schenkel **6, 6.1** jetzt ein U-förmiges Profil **3** bilden. Der Steg **4** mit seiner rinnenförmigen Vertiefung **12** verbleibt unverändert in seiner Position zwischen den Schenkeln **5, 5.1, 6, 6.1.**

Die Schenkel **5, 5.1** der Quadranten **I, II** stehen senkrecht zu Steg **4,** während die Schenkel **6, 6.1** des Quadranten **III, IV** in eine vom Steg **4** abgewinkelte Richtung weisen. D.h., das U-Profil **2** ist senkrecht zum Steg **4** und das U-Profil **3** ist unter einem bestimmten Winkel zum Steg **4** angeordnet. Die beiden versetzt und gegenüberliegenden U-Profile **2, 3** weisen, ungefähr in die entgegengesetzte Richtung. Auch hier wird ein U-förmiges Profil **3** gebildet, welches in einem Winkel ϑ **66** von 135 Grad zum U-förmigen Profil **2** annähernd in die entgegengesetzte Richtung weist. Die beiden Stanzlochpaare **17, 18** und **17.1, 18.1** stehen sich jetzt ebenfalls senkrecht, nur durch die Stegbreite **11** beabstandet, gegenüber. Die beiden Stanzlinien **9, 10** aus der **Fig.1b****,** bilden jetzt eine Außenkante **43,** die parallel beabstandet zur Außenkante **41** verlaufen. Die Vorderseite **22** des Flächenteiles **26** des Quadranten **II** bildet jetzt mit der Rückseite **21** des Flächenteiles **27** des Quadranten **III** eine gemeinsame Vorderseite **44.** Die Vorderseite **44** entspricht der Bedienseite des Verbindungselementes **1.2.** Die gemeinsame Vorderseite **44** der Bedienseite wird durch die verwendeten Biegewinkel ε **67** und ϕ **68** erreicht. Die beiden Flächenteile **25, 26** sind um den rechten Winkel ε **67** und die beiden Flächenteile **27, 28** um den spitzen Winkel ϕ **68** von vorzugsweise 45 Grad, zu einem U-Profil **2, 3** gebogen, wodurch die Schenkel **5, 5.1, 6, 6.1** U-förmige Profile **2, 3** bilden. Ein rechter Biegewinkel ε **67** zwischen den Schenkeln **5, 5.1** und dem Steg **4** sorgt dafür, dass die Schenkel **5, 5.1** senkrecht zum Steg **4** angeordnet sind, während ein spitzer Biegewinkel ϕ **68** zwischen dem Schenkel **6** und dem Steg **4** dafür sorgt, dass der Schenkel **6** schräg zum gemeinsamen Steg **4** verläuft. Der spitze Biegewinkel ϕ **68.1** zwischen dem Schenkel **6.1** und dem Zwischensteg **4.1** sorgt dafür, dass der Schenkel **6.1** parallel zum Schenkel 6 verläuft. Der Biegewinkel ε **67** und der Biegewinkel ϕ **68** sind kongruent zu dem Biegewinkeln ε **67.1** und ϕ **68.1.**

Zwischen den beiden U-förmigen Profilen **2, 3** entsteht auf der Vorderseite **44** ein stumpfer Winkel ϑ **66,** der aus einem rechten Winkel ε **67** und einem spitzen Winkel ϕ **68** gebildet ist. Die gemeinsame Bedienseite der Schenkel **5, 6** verbleibt, obwohl die U-Profile **2, 3** zueinander abgewinkelt angeordnet sind, trotzdem auf der Vorderseite **44** eines Eckwinkel-Verbindungselementes **1.2.** Auf der Bedienseite eines Eckwinkel-Verbindungselementes **1.2** sind Senkungen **19, 19.1, 20, 20.1** in den Stanzlöchern **16, 16.1, 17, 17.1,** für das Einführen von Blindnieten **45,** gemäß der nachstehenden **Figur 3****,** eingebracht.

Die **Fig.2d** zeigt in schematischer Darstellung, auf Basis des Stanzteiles **7.2** gemäß der **Figur 1c****,** ein erfindungsgemäßes Verbindungselement **1** nach dem Biegevorgang. Die in der Figur **1c** aufgezeigten Bezugszeichen werden hier deshalb analog übernommen, weil die technischen Merkmale identisch sind. Nur die Änderungen gegenüber dem Verbindungselement **1** aus der Figur **2a** werden hier aufgezeigt. Das Verbindungselement **1** aus der **Figur 2a** weist bei den U-Profilen **2, 3** kurze Schenkel **5, 5.1, 6, 6.1** auf. In den kurzen Schenkeln **5, 5.1, 6, 6.1** der U-Profile **2, 3** sind die Befestigungslöcher (Stanzlöcher **15, 15.1, 18, 18.1** und **16, 16.1, 17, 17.1**) auf den Mittellinien **36, 37,** die zur Mittellinie **33** parallel beabstandet, vertikal angeordnet. Das Verbindungselement **1** gemäß dieser **Figur 2d** hingegen, weist lange Schenkel **5, 5.1, 6, 6.1** bei den U-Profilen **2, 3** auf. In den langen Schenkeln **5, 5.1, 6, 6.1** der U-Profile **2, 3** sind die Befestigungslöcher (Stanzlöcher **15, 15.1, 16, 16.1** und **17, 17.1, 18, 18.1**) nebeneinander und horizontal zur senkrechten Mittellinie **33** und zum Steg **4,** angeordnet. Die Anzahl der Befestigungslöcher in einem Schenkel **5, 5.1, 6, 6.1** in horizontaler Richtung richtet sich nach der Länge der Schenkel **5, 5.1, 6, 6.1** und kann daher den Erfordernissen angepasst werden. Gleiches gilt für das Verbindungselement **1** gemäß der **Figur 2a****.** Hier wird die Anzahl der Befestigungslöcher übereinander und vertikal zur senkrechten Mittellinie **33** und zum Steg **4** angeordnet. Die Anzahl der Befestigungslöcher richtet sich nach der Länge der Schenkel **5, 5.1, 6, 6.1** in vertikaler Richtung, auch hier ist eine Anpassung an die Erfordernisse bei der Montage möglich.

Die **Fig.3** zeigt ein Verbindungselement **1** im Querschnitt. Hierbei handelt es sich um den Ausschnitt **X** aus der **Figur 2a****.** Die in den **Figuren 1a** **u. 2a** aufgezeigten Bezugszeichen werden hier analog übernommen. Der Ausschnitt **X** zeigt eine Ausführungsform eines Stanzlochpaares **17.1, 18.1** im Verbindungselement 1 auf, das stellvertretend für die anderen Stanzlochpaare **15, 16** u. **15.1, 16.1** u. **17, 18** steht, gemäß den **Figuren 1a****,** **1b****,** **2a****,** **2b****,** **2c****.** Die **Fig.3** zeigt des Weiteren das U-förmige Profil **3,** zwischen dessen Flächenteilen **27, 28** ein Wandbauelement **47,** zur Befestigung eines Verbindungselementes **1** an diesem, eingeschoben ist, bzw. ist das Verbindungselement **1** auf ein Wandelement **47** aufgeschoben. Auf der Vorderseite **44** des Verbindungselementes **1** befindet sich die, im Flächenteil **27** bzw. im Schenkel **6** um das Stanzloch **17.1** angeordnete Senkung **20.1.** Die Senkung **20.1** weist einen Winkel **50** auf, der mit dem Winkel des Blindnietkopfes **51** korrespondiert. Auf der gleichen Mittellinie **48** des Stanzloches **17.1** mit der Senkung **20.1** befindet sich im Flächenteil **28,** beabstandet durch die Dicke des Wandbauelementes **47,** das Stanzloch **18.1.** Das Wandbauelement **47** weist ebenfalls eine Bohrung **49** auf, wobei die Größe der Bohrung **49** dem Durchmesser eines Blindnietes **45** angepasst ist.

Das Stanzloch **17.1** weist in einer ersten Ausführungsform nicht nur eine Senkung **20.1** auf der Vorderseite **44,** sondern durch die Prägung der Senkung **20.1** auch eine definierte Schräge **54** auf der Innenseite **54.1** des Schenkels **6** auf. Die Schräge **54** bildet auf der Innenseite **54.1** des Schenkels **6** eine Erhebung **54.2.** Diese Erhebung **54.2** dient, beim Aufschieben des Verbindungselementes **1** auf ein Wandelement **47,** als erste Befestigung für das Verbindungselement **1.** Die Erhebung **54.2** bildet somit ein Klemmmittel, mit dessen Hilfe das Verbindungselement **1** beim Handling der Wandelemente **47** nicht von einer Schmalseite **55, 56,** s. **Figur 4a****,** herabfallen kann.

In einer weiteren Ausführungsform kann die Erhebung **54.2** auch aus einem definierten Grat **46** an der, dem Wandbauelement **47** zugewandte Seiten, bestehen. Am Beispiel des Stanzloches **17.1** wird, stellvertretend für die anderen Stanzlöcher **16, 16.1, 17,** eine Senkung **20.1** und ein definierter Grat **46** dargestellt. Der Grat **46** ist mit einer Verzahnung (nicht dargestellt) versehen, so dass der Grat **46** wie ein Rastmittel gegenüber dem Wandbauelement **47** wirkt. Die Verzahnung rastet bzw. kratzt sich in die Oberfläche des Wandbauelementes **47** ein, wodurch das Verbindungselement **1** einen Halteeffekt gegenüber dem Wandbauelement **47** aufweist. Aber auch andere Rastmittel sind denkbar. In dem vorliegenden Beispiel befindet sich ein Blindniet **45** in den Stanzlöchern **17.1, 18.1** und der Bohrung **49.** Der Blindniet **45** hat die Aufgabe, die beiden Schenkel **6, 6.1** des U-förmigen Profils **3** eines Verbindungselementes **1** mit einem Wandbauelement **47** zu verbinden. Zur Herstellung der Verbindung, wird ein bekanntes Werkzeug (Setzwerkzeug) eingesetzt, welches nicht näher erläutert werden muss. Bei der Montage eines Wandelementes, mit Hilfe eines Verbindungselementes, vorzugsweise beim Dachausbau, kann zur Befestigung des Verbindungselementes anstelle des Blindnietes auch ein Durchziehniet mit Gewinde oder bekannte Schrauben, z.B. Gipsplattenschrauben (nicht dargestellt), verwendet werden, wenn sich an der Verbindungsstelle ein Dachbalken oder Sparren befindet. Bei der generellen Verwendung von Gipsplattenschrauben, anstelle von Blindnieten, sind die Durchmesser der Stanzlöcher 15, 15.1, 16, 16.1, 17, 17.1, 18. 18.1 und die Senkungen 19, 19.1, 20, 20.1, entsprechend der Abmessungen der Schrauben angepasst.

Die **Fig.4a und 4b** zeigen in schematischer Darstellung ein erfindungsgemäßes Eckwinkel-Verbindungselement **1.1** bzw. **1.2** im Einsatz, beispielsweise beim Dachausbau **53** eines Gebäudes **52.** Hierbei kann es sich um ein Eckwinkel-Verbindungselement **1.1,** gemäß der **Figur 2b****,** oder um ein Eckwinkel-Verbindungselement **1.2,** gemäß der **Figur 2c****,** handeln. Einander entsprechende Bezeichnungen aus den **Figuren 1b****,** **2b** u. **2c** sind daher mit den gleichen Bezugszeichen versehen. Als Basis des Eckwinkel-Verbindungselementes **1.1, 1.2** dient ein einstückiges, flächiges Stanzteil **7, 7.1,** gemäß der **Figur 1a****,** **1b****,** vorzugsweise ein Stanzteil **7.1,** gemäß der **Figur 1b****.** Im Wesentlichen besteht das erfindungsgemäße Verbindungselement **1.1, 1.2,** wie in den Beschreibungen zuvor aufgezeigt, aus einem flächigen Stanzteil **7, 7.1,** das eine quadratische oder annähernd quadratische Form aufweist, die an den Ecken abgerundet ist. Dieses Eckwinkel-Verbindungselement **1.1, 1.2** wird, wie zuvor beschrieben, an den Stanzlinien **9, 10** auseinander gebogen und entlang der Biegelinien **13, 13.1, 14** abgewinkelt, wodurch jeweils zwei Paare von Schenkeln **5, 5.1** u. **6, 6.1** zu U-förmigen Profilen **2, 3** entstehen.

Ein solches Eckwinkel-Verbindungselement **1.1, 1.2** kommt, gemäß der **Fig.4a** **u.** **Fig.4b****,** zur Verbindung plattenförmiger Bauelemente für den Innenausbau, z.B. für die Verkleidung von Wänden, Decken und/oder zur Erstellung von Leichtbauwänden, zum Einsatz. Bei der Montage solcher Wandbauelemente **47** kommen diese Eckwinkel-Verbindungselemente **1.1, 1.2,** vorzugsweise beim Dachausbau **53** zum Einsatz oder überall dort, wo die Schmalseiten **55, 56** der Wandbauelemente **47** nicht senkrecht, sondern, wie bei einer Dachneigung **57,** unter einem bestimmten Winkel **58,** dem Dachneigungswinkel α aufeinander stoßen.

Die Dachneigung **57** ist die Steilheit einer Dachfläche **59,** die als Winkel in Grad, dem Dachneigungswinkel α **58** angegeben wird. Der Dachneigungswinkel α **58** beträgt idR. zwischen 20 Grad und 80 Grad, vorzugsweise 45 Grad. Ein Dachausbau **53** mit Wandbauelementen **47,** um einen begehbaren Raum **60** zu erhalten, beginnt idR. mit der Montage von senkrechten Wandbauelementen **47.1.** An diese senkrechten Wandbauelemente **47.1** schließen sich dann, aufgrund der Dachschräge bzw. Dachneigung **57,** die Wandbauelemente **47.2** an, die unter einem Dachneigungswinkel α **58** mit ihren Schmalseiten **56** an die Schmalseiten **55** der senkrecht angeordneten Wandbauelemente **47.1** anstoßen. Die an der Dachschräge **57** angeordneten Wandbauelemente **47.2** werden dann in Richtung First, soweit in die Höhe verlegt, bis eine waagerechte Decke **61** aus Wandbauelementen **47.3** eingezogen werden kann. D.h., an der Stelle, wo die Schmalseiten **55** der, an die Dachschräge **57** angeordneten Wandbauelemente **47.2** mit den Schmalseiten **56** der, an der waagerechten Decke **61** angeordneten Wandbauelemente **47.3** zusammen stoßen, entsteht wiederum ein Winkel γ **63.** Dieser Winkel γ **63** zwischen der Dachschräge **57** und der waagerechten Decke **61** korrespondiert mit dem Winkel β **62** zwischen den senkrechten Wandbauelementen **47.1** und der Dachschräge **57.** Da diese Winkel ß **62** u. γ **63** kongruent bzw. in der Größe identisch sind, können an beiden Nahtstellen **64, 65** der aneinander liegenden Wandbauelemente **47.1, 47.2, 47.3** die gleichen Eckwinkel-Verbindungselemente **1.1** eingesetzt werden. Wie viele Eckwinkel-Verbindungselemente **1.1** an den Schmalseiten **55, 56** zur Verbindung von Wandbauelementen **47.1, 47.2, 47.3** angeordnet werden, wird den Handwerkern überlassen. Vorteilhafterweise werden je nach Länge und Breite eines Wandbauelementes **47** mehrere Eckwinkel-Verbindungselemente **1.1, 1.2** eingesetzt, um an den Nahtstellen **55, 56** eine höhere Festigkeit zu erhalten und Dehnungsrisse zu vermeiden. Aufgrund unterschiedlicher Dachneigungen **57,** werden entsprechende Eckwinkel-Verbindungselemente **1.1, 1.2** mit verschiedenen Winkeln ϑ **66** zwischen den Schenkeln **5, 6** der U-förmigen Profile **2, 3,** vorgehalten.

In der **Fig.4a und 4b** beträgt der Winkel -9 **66** bei den Eckwinkel-Verbindungselementen **1.1, 1.2,** vorzugsweise 135 Grad, welcher dem Winkel **62, 63** entspricht. Diese 135 Grad Eckwinkel-Verbindungselemente **1.1, 1.2** können verschiedene Stegbreiten **11** aufweisen. Die Stegbreiten **11** werden aus dem Steg **11** oder aus Steg **11** mit dem Zwischensteg **11.1** gebildet, um unterschiedliche Dicken von Wandbauelementen **47** aufnehmen zu können, bzw. um unterschiedliche Abstände zwischen den Schenkeln **5, 5.1, 6, 6.1** der U-Profile **2, 3** vorhalten zu können.

**Bezugszeichenliste:**

| | | | |
|---|---|---|---|
| 1 | Verbindungselement | 18.1 | Stanzloch |
| 1.1 | Eckwinkel-Verbindungselement | 19 | Senkung |
| 1.2 | Eckwinkel-Verbindungselement | 19.1 | Senkung |
| 2 | U-Profil | 20 | Senkung |
| 3 | U-Profil | 20.1 | Senkung |
| 4 | Steg | 21 | Rückseite |
| 4.1 | Zwischensteg | 22 | Vorderseite |
| 5 | Schenkel (v.2) | 23 | Außenkante |
| 5.1 | Schenkel (v. 2) | 24 | Außenkante |
| 6 | Schenkel (v. 3) | 25 | Flächenteil (v.I) |
| 6.1 | Schenkel (v.3) | 26 | Flächenteil (v.II) |
| 7 | Stanzteil | 27 | Flächenteil (v.III) |
| 7.1 | Stanzteil | 28 | Flächenteil (v.IV) |
| 7.2 | Stanzteil | 29 | Flächenteil (v.4) |
| 8 | Durchgehende Linie | 30 | V-Ausschnitt |
| 9 | Stanzschnitt | 31 | V-Ausschnitt |
| 10 | Stanzschnitt | 32 | horizontale Mittellinie |
| 11 | Stegbreite | 33 | senkrechte Mittellinie |
| 11.1 | Zwischenstegbreite | 34 | Abstand (in I u. IV) |
| 12 | Rinnenförmige Vertiefung | 35 | Abstand (in II u.III) |
| 13 | Biegelinie | 36 | Mittellinie (15,15.1,18,18.1) |
| 13.1 | Biegelinie | 36.1 | Mittellinie (18, 18.1) |
| 14 | Biegelinie | 37 | Mittellinie (16,16.1,17,17.1) |
| 15 | Stanzloch | 38 | Abstand |
| 15.1 | Stanzloch | 38.1 | Abstand |
| 16 | Stanzloch | 39 | Abstand |
| 16.1 | Stanzloch | 39.1 | Abstand |
| 17 | Stanzloch | 40 | Außenkante |
| 17.1 | Stanzloch | 41 | Außenkante |
| 18 | Stanzloch | 42 | Außenkante |
| 43 | Außenkante | 64 | Nahtstelle |
| 44 | Vorderseite (Bedienseite) | 65 | Nahtstelle |
| 45 | Blindniet | 66 | Winkel ϑ |
| 46 | Grat | 67 | Winkel ε |
| 47 | Wandelement | 67.1 | Winkel ε |
| 47.1 | Wandelement senkrecht | 68 | Winkel ϕ |
| 47.2 | Wandelement schräge | 68.1 | Winkel ϕ |
| 47.3 | Wandelement waagerecht | 69 | Winkel e |
| 48 | Mittelline | 70 | Mittellinie (15,16) |
| 49 | Bohrung | 71 | Mittellinie (15.1,16.1) |
| 50 | Winkel | 72 | Mittellinie (17,18) |
| 51 | Blindnietkopf | 73 | Mittellinie (17.1,18.1) |
| 52 | Gebäude | 74 | Mittellinie |
| 53 | Dachausbau | 75 | Mittellinie |
| 54 | Schräge | 76 | Abstand (18 zu 18.1) |
| 54.1 | Innenseite | 77 | Abstand (17 zu 17.1) |
| 54.2 | Erhebung | 78 | Abstand (18.1 zu 13) |
| 55 | Schmalseite | 79 | Abstand (17.1 zu 14) |
| 56 | Schmalseite | I | Quadrant |
| 57 | Dachneigung (-schräge) | II | Quadrant |
| 58 | Winkel | III | Quadrant |
| 59 | Dachfläche | IV | Quadrant |
| 60 | Raum | | |
| 61 | waagerechte Decke | | |
| 62 | Winkel β | | |
| 63 | Winkel γ | | |

## Patentansprüche

1. Verbindungselement zum Verbinden von mindestens zwei Wandbauelementen **(47),** wobei das einstückige, aus einem Blechteil aus vier Flächenteilen **(25, 26, 27, 28),** die jeweils einem Quadranten **I**, **II**, **III, IV** entsprechen und einem Steg **(4)** gebildete, gestanzte und geformte Verbindungselement **(1)** die Form eines Doppel-U aufweist, das aus zwei versetzt und gegenüber liegenden U-Profilen **(2, 3)** gebildet ist, die einen gemeinsamen Steg **(4)** aufweisen, wobei ein U-Profil **(2, 3)** aus jeweils zwei, durch einen Steg **(4)** beabstandeten Schenkeln **(5, 5.1, 6, 6.1)** besteht, die in senkrechter Richtung und in, um 180 Grad voneinander abgewandter Richtung, sich vom Steg **(4)** erstrecken, wobei das Verbindungselement **(1)** aus einem flachen Stanzteil **(7)** aus Blech gebildet ist, das eine geometrische Kontur aufweist, die zwei, auf einer durchgehenden Linie **(8)** von jeweils einer Außenkante **(23, 24)** zur Mitte des Stanzteiles **(7)** verlaufend, voneinander beabstandete Stanzschnitte **(9, 10)** enthält, die mittig zur Kontur des Verbindungselementes **(1)** angeordnet sind und deren Abstand zueinander eine Stegbreite **(11)** bildet, die der Stärke eines Wandbauelementes **(47)** entspricht, wobei die Stegbreite **(11),** in senkrechter Richtung zu den Stanzschnitten **(9, 10)** verlaufend, den Steg **(4)** des Verbindungselementes **(1)** bildet, wobei zum Ende der beiden aufeinander zulaufenden Stanzschnitte **(9, 10)** und senkrecht zu diesen, jeweils eine Biegelinie **(13, 14)** verläuft, die parallel beabstandet zu einer senkrechten Mittellinie **(33)** angeordnet sind, wobei die beiden Stanzschnitte **(9, 10)** und die beiden Biegelinien **(13, 14)** vier Quadranten I, II, III, IV als Flächenteile **(25, 26, 27, 28)** bilden,
wobei die Quadranten I, II der Flächenteile (25, 26) nach dem Abkanten jeweils einen Schenkel (5, 5.1) des U-Profils (2) bilden und die Quadranten III, IV der Flächenteile (27, 28) nach dem Abkanten jeweils einen Schenkel (6, 6.1) des U-Profils (3) bilden und zwischen den beiden Biegelinien **(13, 14)** aus dem verbleibenden Flächenteil **(29)** der schmale Steg **(4)** gebildet wird, wobei in jedem Quadranten I - IV eines Flächenteiles **(25, 26, 27, 28)** mindestens ein Stanzloch **(15, 15.1, 16, 16.1, 17, 17.1, 18, 18.1)** angeordnet ist, **dadurch gekennzeichnet,**
**dass** der Steg (4) des Verbindungselementes (1) mit einer rinnenförmigen Vertiefung (12) ausgebildet ist, die symmetrisch im Steg (4) angeordnet ist, und wobei die Länge der rinnenförmigen Vertiefung (12) zwischen 10% bis 90% der Gesamtlänge des Verbindungselementes (1) entspricht,
und
**dass** die, in der Quadranten II und III befindlichen Stanzlöcher **(16, 16.1, 17, 17.1)** mit einer Senkung **(19, 19.1, 20, 20.1)** versehen sind, wobei die Senkung (19, 19.1) des mindestens einen Stanzlochs (16,16.1) im Quadraten II auf der Vorderseite (22) und die Senkung (20, 20.1) des mindestens einen Stanzlochs (17, 17.1) im Quadraten III auf der Rückseite (21) des Stanzteiles (7, 7.1, 7.2) angeordnet ist,
so dass die Senkungen **(19, 19.1, 20, 20.1)** im fertig gebogenen Zustand des Verbindungselementes **(1)** von der Bedienseite **(44)** eines U-Profils (2, **3)** zur Innenseite **(54.1)** weisen.

2. Verbindungselement **(1)** nach Anspruch 1, **dadurch gekennzeichnet, dass** die, mit einer Senkung **(19, 19.1)** auf der Vorder- **(22)** und Rückseite **(21)** eines Stanzteiles **(7, 7.1, 7.2)** versehenen Stanzlöcher **(16, 16.1, 17, 17.1)** im fertig gebogenen Zustand des Verbindungselementes **(1)** eine Erhebung **(54.2)** oder einen definierten Grat **(46)** auf der Innenseite **(54.1)** eines Schenkels **(5, 6)** aufweisen.

3. Verbindungselement **(1)** nach Anspruch 2, **dadurch gekennzeichnet, dass** die Stanzlöcher **(15, 15.1, 18, 18.1)** ohne Senkungen mit den Stanzlöchern **(16, 16.1, 17, 17.1)** mit Senkungen **(19, 19.1, 20, 20.1)** im fertig gebogenen Zustand des Verbindungselementes **(1)** jeweils ein Paar von Stanzlöchern **(15, 16; 15.1, 16.1; 17, 18; 17.1, 18.1)** bilden, die in einem U-förmigen Profil **(2, 3)** senkrecht und parallel durch den Steg **(4)** beabstandet zueinander stehen und eine gemeinsame Mittellinie **(48)** aufweisen.

4. Verbindungselement **(1)** nach Anspruch 3, **dadurch gekennzeichnet, dass** die Stanzlöcher **(15, 15.1, 18, 18.1)** ohne Senkungen auf einer Mittellinie **(36, 36.1)** im Flächenteil **(25, 28)** und die Stanzlöcher **(16, 16.1, 17, 17.1)** mit Senkungen **(19, 19.1, 20, 20.1)** auf einer Mittellinie **(37)** im Flächenteil **(26, 27)** eines Stanzteiles **(7, 7.1, 7.2)** angeordnet sind, wobei die Mittelllinien **(36, 36.1, 37)** der Stanzlöcher **(15, 15.1, 16, 16.1, 17, 17.1, 18, 18.1)** parallel zur Mittellinie **(33)** und zur Außenkante **(23, 24)** eines Stanzteiles **(7, 7.1, 7.2)** beabstandet sind und zu den Biegelinien **(13, 14)** eines Stanzteiles **(7, 7.1, 7.2)** einen parallelen Abstand **(34, 35)** aufweisen.

5. Verbindungselement **(1)** nach Anspruch 3, **dadurch gekennzeichnet, dass** ein Stanzlochpaar **(15, 16)** auf einer Mittellinie **(70)** im Flächenteil **(25, 26)** eines Stanzteiles **(7, 7.1, 7.2)** und ein Stanzlochpaar **(15.1, 16.1)** auf einer Mittellinie **(71),** ebenfalls im Flächenteil **(25, 26)** eines Stanzteiles **(7, 7.1, 7.2)** und ein Stanzlochpaar **(17, 18)** auf einer Mittellinie **(72)** im Flächenteil **(27, 28)** eines Stanzteiles **(7, 7.1, 7.2)** und ein Stanzlochpaar **(17.1, 18.1)** auf einer Mittellinie **(73)** im Flächenteil **(27, 28)** eines Stanzteiles **(7, 7.1, 7.2)** angeordnet sind, wobei die Mittelllinien **(70, 71, 72, 73)** parallel zur Mittellinie **(32)** und zur Außenkante **(40, 41)** beabstandet sind und zu der Mittellinie **(32)** einen Abstand **(38, 38.1, 39, 39.1)** aufweisen.

6. Verbindungselement **(1)** nach Anspruch 1 bis 5, **dadurch gekennzeichnet, dass** die Flächenteile **(25, 26, 27, 28)** in senkrechter Richtung versetzt und schräg gegenüberliegend zum Steg **(4)** verlaufen und um jeweils einen spitzen Winkel ϕ **(68)** kleiner 90 Grad vom Steg **(4)** abgewinkelt sind, wodurch sich die beiden U-Profile **(2, 3)** in einem stumpfen Winkel ϑ **(66)** in voneinander abgewandter Richtung erstrecken und ein Eckwinkel-Verbindungselement **(1.1)** bilden.

7. Verbindungselement **(1)** nach Anspruch 1 bis 5, **dadurch gekennzeichnet, dass** die Schenkel **(5, 5.1)** der Flächenteile **(25, 26)** eines ersten U-Profils **(2)** in einem rechten Winkel ε **(67)** zum Steg **(4)** und die, in senkrechter Richtung versetzt angeordneten Schenkel **(6, 6.1)** der Flächenteile **(27, 28)** eines zweiten U-Profils **(3),** in einem spitzen Winkel ϕ **(68)** zum Steg **(4)** angeordnet sind, wodurch die beiden U-Profile **(2, 3)** sich um einen stumpfen Winkel ϑ **(66),** in voneinander abgewandter Richtung, erstrecken und ein Eckwinkel-Verbindungselement **(1.2)** bilden.

8. Verbindungselement **(1)** nach Anspruch 7, **dadurch gekennzeichnet, dass** zwischen dem Flächenteil **(28)** und dem Steg **(4)** ein Zwischensteg **(4.1)** angeordnet ist, von welchem das Flächenteil **(28)** vom Steg **(4)** beabstandet ist, wodurch ein asymmetrisches Stanzteil **(7.1)** gebildet wird.

9. Verbindungselement **(1)** nach Anspruch 8, **dadurch gekennzeichnet, dass** das Flächenteil **(27)** des Quadranten **III** entlang der Biegelinie **(14)** um einen Winkel **(68)** von 45 Grad nach vorne zur Bedienseite **(44)** gebogen ist und einen Schenkel **(6)** bildet, wobei der Zwischensteg **(4.1)** an der Biegelinie **(13)** ebenfalls um einen Winkel **(67.1)** von 90 Grad nach vorne gebogen ist und senkrecht zum Steg **(4)** steht und dass sich das, an den Zwischensteg **(4.1)** anschließende Flächenteil **(28)** des Quadranten **IV,** an der Biegelinie **(13.1)** um einen Winkel **(68.1)** ebenfalls nach vorne biegt und einen Schenkel **(6.1)** bildet, der mit dem Schenkel **(6)** des Flächenteils **(27)** ein u-förmiges Profil **(3)** bildet, weil die Biegewinkel **(67, 68)** der Schenkel **(5, 6)** der Quadranten **II, III** kongruent zu den Biegewinkeln **(67.1, 68.1)** der Schenkel **(5.1, 6.1)** der Quadranten **I, IV** sind.

## Claims

1. Connecting element for connecting at least two wall structural elements **(47),** wherein the one-piece connecting element **(1)** formed, stamped and moulded from a sheet metal part comprising four surface parts **(25, 26, 27, 28),** which each correspond to a quadrant **I**, **II**, **III, IV** and a web **(4)** have the form of a double U which is formed from two offset and opposite U profiles **(2, 3)** which have a common web **(4),** wherein one profile **(2, 3)** consists of respectively two legs **(5, 5.1, 6, 6.1)** spaced apart by a web **(4),** which extend from the web **(4)** in a perpendicular direction and in a direction facing away from one another by 180 degrees, wherein the connecting element **(1)** is formed from a flat stamped part **(7)** of sheet metal, which has a geometrical contour containing two spaced-apart stamped sections **(9, 10**) running on a continuous line **(8)** from respectively one outer edge **(23, 24)** to the centre of the stamped part **(7),** which are arranged centrally to the contour of the connecting element **(1)** and whose distance from one another forms a web width **(11),** which corresponds to the thickness of a wall structural element **(47),** wherein the web width **(11),** running in the perpendicular direction to the stamped sections **(9, 10)** forms the web **(4)** of the connecting element **(1),** wherein respectively one bending line **(13, 14)** runs to the end of the two stamped sections **(9, 10**) running towards one another and perpendicular to these, which are arranged spaced apart parallel to a perpendicular centre line **(33),** wherein the two stamped sections **(9, 10)** and the two bending lines **(13, 14)** form four quadrants I, II, III, IV as surface parts **(25, 26, 27, 28)** wherein the quadrants **I, II** of the surface parts **(25, 26)** after chamfering each form a leg **(5, 5.1)** of the U profile **(2)** and the quadrants III, IV of the surface parts **(27, 28)** after chamfering each form a leg **(6, 6.1)** of the U profile **(3)** and the narrow web **(4)** is formed between the two bending lines **(13, 14)** from the remaining surface part **(29),** wherein in each quadrant I-IV of a surface part **(25, 26, 27, 28)** at least one stamped hole **(15, 15.1, 16, 16.1, 17, 17.1, 18, 18.1)** is arranged, **characterized in that** the web **(4)** of the connecting element **(1)** is configured with a trough-shaped indentation **(12)** which is arranged symmetrically in the web **(4)** and wherein the length of the trough-shaped indentation **(12)** corresponds to between 10% to 90% of the total length of the connecting element **(1)** and that the stamped holes **(16, 16.1, 17, 17.1)** located in the quadrants II and III are provided with a depression **(19, 19.1, 20, 20.1)** wherein the depression **(19, 19.1)** of the at least one stamped hole **(16, 16.1)** in the quadrant II is arranged on the front side **(22)** and the depression **(20, 20.1)** of the at least one stamped hole **(17, 17.1)** in the quadrant III is arranged on the rear side **(21)** of the stamped part **(7, 7.1, 7.2)** so that the depressions **(19, 19.1, 20, 20.1)** in the finished bent state of the connecting element **(1)** point from the operating side **(44)** of a U profile **(2, 3)** to the inner side **(54.1).**

2. Connecting element **(1)** according to Claim 1, **characterized in that** the stamped holes **(16, 16.1, 17, 17.1)** provided with a depression **(19, 19.1)** on the front **(22)** and rear side **(21)** of a stamped part **(7, 7.1, 7.2)** in the finished bent state of the connecting element **(1)** have an elevation **(54.2)** or a defined burr **(46)** on the inner side **(54.1)** of a leg **(5, 6).**

3. Connecting element **(1)** according to Claim 2, **characterized in that** the stamped holes **(15, 15.1, 18, 18.1)** without depressions each form a pair of stamped holes **(15, 16; 15.1, 16.1; 17, 18; 17.1, 18.1)** with the stamped holes **(16, 16.1, 17, 17.1)** with depressions **(19, 19.1, 20, 20.1)** in the finished bent state, which are spaced apart from one another in a U-shaped profile **(2, 3)** perpendicular and parallel through the web **(4)** and have a common central line **(48).**

4. Connecting element **(1)** according to Claim 3, **characterized in that** the stamped holes **(15, 15.1, 18, 18.1)** without depressions are arranged on a centre line **(36, 36.1)** in the surface part **(25, 28)** and the stamped holes **(16, 16.1, 17, 17.1)** with depressions **(19, 19.1, 20, 20.1)** are arranged on a centre line **(37)** in the surface part **(26, 27)** of a stamped part **(7, 7.1, 7.2),** wherein the centre lines **(36, 36.1, 37)** of the stamped holes **(15, 15.1, 16, 16.1, 17, 17.1, 18, 18.1)** are spaced apart parallel to the centre line **(33)** and to the outer edge **(23, 24)** of a stamped part **(7, 7.1, 7.2)** and have a parallel spacing **(34, 35)** from the bending lines **(13, 14)** of a stamped part **(7, 7.1, 7.2).**

5. Connecting element **(1)** according to Claim 3, **characterized in that** a stamped hole pair **(15, 16)** is arranged on a centre line **(70)** in the surface part **(25, 26)** of a stamped part **(7, 7.1, 7.2)** and a stamped hole pair **(15.1, 16.1)** is arranged on a centre line **(71)** also in the surface part **(25, 26)** of a stamped part **(7, 7.1, 7.2)** and a stamped hole pair **(17, 18)** is arranged on a centre line **(72)** in the surface part **(27, 28)** of a stamped part **(7, 7.1, 7.2)** and a stamped hole pair **(17.1, 18.1)** is arranged on a centre line **(73)** in the surface part **(27, 28)** of a stamped part **(7, 7.1, 7.2)** wherein the centre lines **(70, 71, 72, 73)** are spaced apart parallel to the centre line **(32)** and to the outer edge **(40, 41)** and have a distance **(38, 38.1, 39, 39.1)** to the centre line **(32).**

6. Connecting element **(1)** according to Claim 1 to 5, **characterized in that** the surface parts **(25, 26, 27, 28)** run offset in the perpendicular direction and obliquely opposite towards the web **(4)** and are each angled from the web **(4)** by respectively one acute angle ϕ **(68)** of less than 90 degrees with the result that the two U profiles **(2, 3)** extend at an obtuse angle ϑ **(66)** in a direction facing away from one another and form a corner-angle connecting element **(1.1).**

7. Connecting element **(1)** according to Claim 1 to 5, **characterized in that** the legs **(5, 5.1)** of the surface parts **(25, 26)** of a first U profile **(2)** are arranged at a right angle ε **(67)** to the web **(4)** and the legs **(6, 6.1)** of the surface parts **(27, 28)** of a second U profile **(3)** arranged offset in the perpendicular direction are arranged at an acute angle ϕ **(68)** to the web **(4)** with the result that the two U profiles **(2, 3)** extend at an obtuse angle ϑ **(66),** in a direction facing away from one another and form a corner-angle connecting element **(1.2).**

8. Connecting element **(1)** according to Claim 7, **characterized in that** an intermediate web **(4.1)** is arranged between the surface part **(28)** and the web **(4)** by which the surface part **(28)** is spaced apart from the web **(4),** with the result that an asymmetric stamped part **(7.1)** is formed.

9. Connecting element **(1)** according to Claim 8, **characterized in that** the surface part **(27)** of the quadrant **III** is bent along the bending line **(14)** by an angle **(68)** of 45 degrees to the front to the operating side **(44)** and forms a leg **(6),** wherein the intermediate web **(4.1)** is bent forwards at the bending line **(13)** also by an angle **(67.1)** of 90 degrees and is perpendicular to the web **(4) and** that the surface part **(28)** of the quadrant **IV** adjoining the intermediate web **(4.1)** is also bent forwards by an angle **(68.1)** at the bending line **(13.1)** and forms a leg **(6.1)** which forms a u-shaped profile **(3)** with the leg **(6)** of the surface part **(27)** because the bending angles **(67, 68)** of the legs **(5, 6)** of the quadrants **II, III** are congruent to the bending angles **(67.1, 68.1)** of the legs **(5.1, 6.1)** of the quadrants **I, IV.**

## Revendications

1. Élément d'assemblage, destiné à assembler au moins deux éléments de construction **(47)** de parois, l'élément d'assemblage **(1)** d'un seul tenant, constitué d'une pièce de tôle en quatre pièces planes **(25, 26, 27, 28),** dont chacune correspond à un quadrant **I, II, III, IV** et d'une barrette **(4),** estampé et façonné présentant la forme d'un double U, qui est constitué de deux profilés en U **(2, 3)** situés en vis-à-vis et avec un décalage, qui comportent une barrette **(4)** conjointe, un profilé en U **(2, 3)** consistant dans deux branches **(5, 5.1, 6, 6.1)** chaque fois écartées par une barrette **(4),** qui dans la direction verticale et dans une direction mutuellement opposée de 180 degrés s'étendent à partir de la barrette **(4),** l'élément d'assemblage **(1)** étant constitué d'une pièce estampée **(7)** plate en tôle, qui présente un contour géométrique, qui comprend deux découpes estampées **(9, 10**) écartées l'une de l'autre, s'écoulant sur des lignes **(8)** continues, partant chacune d'une arête extérieure **(23, 24)** vers le milieu de la pièce estampée **(7),** qui sont placées au centre du contour de l'élément d'assemblage **(1)** et dont l'écart mutuel constitue une largeur de barrette **(11),** qui correspond à l'épaisseur d'un élément de construction **(47)** de paroi, la largeur de barrette **(11),** en s'écoulant en direction perpendiculaire par rapport aux découpes estampées **(9, 10)** constituant la barrette **(4)** de l'élément d'assemblage **(1),** vers l'extrémité des deux découpes estampées **(9, 10)** mutuellement convergentes et à la perpendiculaire de celles-ci s'écoulant chaque fois une ligne de courbure **(13, 14)** qui est placée avec un écart parallèle par rapport à une ligne médiane **(33)** perpendiculaire, les deux découpes estampées **(9, 10)** et les deux lignes de courbure **(13, 14)** constituant quatre quadrants I, II, III, IV en tant que pièces planes **(25, 26, 27, 28),** après le chanfreinage, les quadrants I, II des pièces planes **(25, 26)** constituant chacun une branche **(5, 5.1)** du profilé en U **(2)** et après le chanfreinage, les quadrants III, IV des pièces planes **(27, 28)** constituant chacun une branche **(6, 6.1)** du profilé en U **(3)** et entre les deux lignes de courbure **(13, 14),** la barrette **(4)** étroite étant constituée à partir de la pièce plane **(29)** restante, dans chaque quadrant I à IV d'une pièce plane **(25, 26, 27, 28)** étant placé au moins un trou estampé **(15, 15.1, 16, 16.1, 17, 17.1, 18, 18.1), caractérisé en ce que** la barrette **(4)** de l'élément d'assemblage **(1)** est conçue avec un renfoncement **(12)** en forme de gouttière, qui est placé de manière symétrique dans la barrette **(4),** et la longueur du renfoncement **(12)** en forme de gouttière correspondant à de 10 % à 90 % de la longueur totale de l'élément d'assemblage **(1)** et **en ce que** les trous estampés **(16, 16.1, 17, 17.1)** se trouvant dans les quadrants II et III sont munis d'un rabaissement **(19, 19.1, 20, 20.1),** le rabaissement **(19, 19.1)** de l'au moins un trou estampé **(16, 16.1)** étant placé dans le quadrant II sur la face avant **(22)** et le rabaissement **(20, 20.1)** de l'au moins un trou estampé **(17, 17.1)** étant placé dans le quadrant III sur la face arrière **(21)** de la pièce estampée **(7, 7.1, 7.2),** de telle sorte que dans l'état recourbé final de l'élément d'assemblage (1), les rabaissements **(19, 19.1, 20, 20.1)** soient dirigés de la face de commande **(44)** d'un profilé en U **(2, 3)** vers la face interne **(54.1).**

2. Élément d'assemblage **(1)** selon la revendication 1, **caractérisé en ce que**, dans l'état recourbé final de l'élément d'assemblage **(1),** les trous estampés **(16, 16.1, 17, 17.1)** munis d'un rabaissement **(19, 19.1)** sur la face avant **(22)** et la face arrière **(21)** d'une pièce estampée **(7, 7.1, 7.2)** comportent une surélévation **(54.2)** ou une crête **(46)** définie sur la face interne **(54.1)** d'une branche **(5, 6).**

3. Élément d'assemblage **(1)** selon la revendication 2, **caractérisé en ce que** dans l'état recourbé final de l'élément d'assemblage **(1),** les trous estampés **(15, 15.1, 18, 18.1)** exempts de rabaissements constituent chaque fois avec les trous estampés **(16, 16.1, 17, 17.1)** munis de rabaissements **(19, 19.1, 20, 20.1)** une paire de trous estampés **(15, 16 ; 15.1, 16.1** ; **17, 18 ; 17.1, 18.1)** qui se situent avec un écart mutuel perpendiculaire et parallèle assuré par la barrette **(4)** dans un profilé en U **(2, 3)** et qui comportent une ligne médiane **(48)** conjointe.

4. Élément d'assemblage **(1)** selon la revendication 3, **caractérisé en ce que** les trous estampés **(15, 15.1, 18, 18.1)** exempts de rabaissements sont placés sur une ligne médiane **(36, 36.1)** dans la pièce plane **(25, 28)** et les trous estampés **(16, 16.1, 17, 17.1)** munis de rabaissements **(19, 19.1, 20, 20.1)** sont placés sur une ligne médiane **(37)** dans la pièce plane **(26, 27)** d'une pièce estampée **(7, 7.1, 7.2),** les lignes médianes **(36, 36.1, 37)** des trous estampés **(15, 15.1, 16, 16.1, 17, 17.1, 18, 18.1)** étant écartées à la parallèle de la ligne médiane **(33)** et de l'arête extérieure **(23, 24)** d'une pièce estampée **(7, 7.1, 7.2)** et présentant un écart **(34, 35)** parallèle par rapport aux lignes de courbure **(13, 14)** d'une pièce estampée **(7, 7.1, 7.2).**

5. Élément d'assemblage **(1)** selon la revendication 3, **caractérisé en ce qu'**une paire **(15, 16)** de trous estampés est placée sur une ligne médiane **(70)** dans la pièce plane **(25, 26)** d'une pièce estampée **(7, 7.1, 7.2)** et une paire **(15.1, 16.1)** de trous estampés est placée sur une ligne médiane **(71),** également dans la pièce plane **(25, 26)** d'une pièce estampée **(7, 7.1, 7.2)** et une paire **(17, 18)** de trous estampés est placée sur une ligne médiane **(72)** dans la pièce plane **(27, 28)** d'une pièce estampée **(7, 7.1, 7.2)** et une paire **(17.1, 18.1)** de trous estampés est placée sur une ligne médiane **(73)** dans la pièce plane **(27, 28)** d'une pièce estampée **(7, 7.1, 7.2),** les lignes médianes **(70, 71, 72, 73)** étant écartées à la parallèle de la ligne médiane **(32)** et de l'arête extérieure **(40, 41)** et présentant un écart **(38, 38.1, 39, 39.1)** par rapport à la ligne médiane **(32).**

6. Élément d'assemblage **(1)** selon la revendication 1 à 5, **caractérisé en ce que** les pièces planes **(25, 26, 27, 28)** s'écoulent avec un décalage dans la direction perpendiculaire et en étant diagonalement opposées par rapport à la barrette **(4)** et sont coudées de la valeur de chaque fois un angle aigu ϕ **(68)** inférieur à 90 degrés à partir de la barrette **(4),** suite à quoi les deux profilés U **(2, 3)** s'étendent sous une angle obtus ϑ **(66),** dans des directions mutuellement opposées et constituent un élément d'assemblage **(1.1)** en cornière d'angle.

7. Élément d'assemblage **(1)** selon la revendication 1 à 5, **caractérisé en ce que** les branches **(5, 5.1)** des pièces planes **(25, 26)** d'un premier profilé en U **(2)** sont placées sous un angle droit ε **(67)** par rapport à la barrette **(4)** et les branches **(6, 6.1)** des pièces planes **(27, 28)** placées avec un déport perpendiculaire d'un deuxième profilé en U **(3)** sont placées sous un angle aigu ϕ **(68)** par rapport à la barrette **(4),** suite à quoi, les deux profilés en U **(2, 3)** s'étendent sous un angle obtus ϑ **(66),** dans des directions mutuellement opposées et constituent un élément d'assemblage **(1.2)** en cornière d'angle.

8. Élément d'assemblage **(1)** selon la revendication 7, **caractérisé en ce qu'**entre la pièce plane **(28)** et la barrette **(4)** est placée une barrette intermédiaire **(4.1),** par laquelle la pièce plane **(28)** est écartée de la barrette **(4),** suite à quoi est constituée une pièce estampée **(7.1)** asymétrique.

9. Élément d'assemblage **(1)** selon la revendication 8, **caractérisé en ce que** la pièce plane **(27)** du quadrant **III** est recourbée le long de la ligne de courbure **(14)** de la valeur d'un angle **(68)** de 45 degrés vers l'avant, en direction de la face de commande **(44)** et constitue une branche **(6),** la barrette intermédiaire **(4.1)** sur la ligne de courbure **(13)** étant également recourbée de la valeur d'un angle **(67.1)** de 90 degrés vers l'avant et se trouvant à la perpendiculaire de la barrette **(4)** et **en ce que** la pièce plane **(28)** du quadrant **IV** se raccordant sur la barrette intermédiaire **(4.1)** est également recourbée vers l'avant sur la ligne de courbure **(13.1)** de la valeur d'un angle **(68.1)** et constitue une branche **(6.1),** qui avec les branches **(6)** de la pièce plane **(27)** constitue un profilé en U **(3),** car les angles de courbure **(67, 68)** des branches **(5,** 6) des quadrants **II, III** sont congruents par rapport aux angles de courbure **(67.1, 68.1)** des branches **(5.1, 6.1)** des quadrants **I, IV.**
